# EUROPEAN PATENT SPECIFICATION

(11) **EP 4 156 788 B1**
(45) Date of publication and mention of the grant of the patent: **28.01.2026**
(21) Application number: 20943130.3
(22) Date of filing: 29.06.2020
(51) Int. Cl.: H04W 40/12, H04W 28/02, H04W 40/22, H04W 52/24, H04W 52/38, H04W 52/48

(54) **DATA TRANSMISSION METHOD AND APPARATUS**
DATENÜBERTRAGUNGSVERFAHREN UND -VORRICHTUNG
PROCÉDÉ ET APPAREIL DE TRANSMISSION DE DONNÉES

(43) Date of publication of application: 29.03.2023
(73) Proprietor: HUAWEI TECHNOLOGIES CO., LTD., Shenzhen, Guangdong 518129 (CN)
(72) Inventor: LIU, Hang, Shenzhen, Guangdong 518129 (CN); WANG, Jian, Shenzhen, Guangdong 518129 (CN); YANG, Changqing, Shenzhen, Guangdong 518129 (CN)
(74) Representative: Pfenning, Meinig & Partner mbB
(86) International application number: PCT/CN2020/098909
(87) International publication number: WO 2022/000182

(56) References cited:
- WO-A1-2014/025301
- CN-A- 106 102 119
- CN-A- 109 547 975
- CN-A- 110 461 020
- US-A1- 2019 037 430
- US-A1- 2019 349 835
- US-A1- 2020 068 580

## Description

### TECHNICAL FIELD

This application relates to the field of communication technologies, in particular, to short-range communication, and more specifically, to a data transmission method and apparatus in the field of communication technologies.

### BACKGROUND

With people's increasing requirements for personalized driving experience, an intelligent cockpit service plays an increasingly important role in people's driving process. An intelligent cockpit usually includes a plurality of devices such as a cockpit domain controller (cockpit domain controller, CDC), a vehicle-mounted speaker, a vehicle-mounted microphone, a vehicle-mounted display, an intelligent terminal, and another portable device. The CDC is connected to various devices in a wired manner or a wireless manner, and controls these devices, to provide people with richer entertainment, audio, video, and office experience.

In an intelligent cockpit environment, when the intelligent terminal communicates with the CDC, channel fading between the CDC and the intelligent terminal may occur due to blockage by a seat or a body of another passenger. Therefore, communication quality and communication efficiency are relatively poor.
US 2019/349835 A1 concerns a relay determining method and apparatus. The method includes: sending a first message to a second terminal, where the first message is used to instruct the second terminal to determine a type of the second terminal based on the first message; the first-type terminal sends first measurement information; or the second-type terminal receives first measurement information sent by a first-type terminal, determines quality of a first link between the first-type terminal and the second-type terminal, and sends the quality of the first link to the first terminal; receiving the quality of the first link sent by the second-type terminal; determining a mapping relationship between the first-type terminal and the second-type terminal based on the quality of the first link; and sending the mapping relationship to terminals corresponding to the mapping relationship.
US 2020/068580 A1 provides a mechanism for suppressing consumed power of a remote communication apparatus related to measurement. A remote communication apparatus is capable of communicating with a base station via mediation of communication by a relay communication apparatus configured to be movable, and includes a control unit that selects a link to measure on the basis of association information that correlates a first relay communication apparatus with the remote communication apparatus.

### SUMMARY

Embodiments of this application provide a data transmission method and apparatus. This can reduce complexity of link quality measurement, to improve communication quality and communication efficiency. The invention is defined in the appended set of claims.

According to a first aspect, an embodiment of this application provides a data transmission method. The method is applied to a data transmission system. The data transmission system includes a first control apparatus, a second control apparatus, and at least one terminal device. The method may include: The first control apparatus sends first indication information to the second control apparatus. The first indication information is used to indicate to measure link quality between the second control apparatus and the at least one terminal device. The second control apparatus receives the first indication information from the first control apparatus. The second control apparatus generates first data. The second control apparatus sends the first data to the at least one terminal device based on the first indication information. The first data is used to measure the link quality between the second control apparatus and the at least one terminal device. The at least one terminal device receives the first data from the second control apparatus. At least one first terminal device sends feedback information to the first control apparatus. The feedback information of the first terminal device is used to indicate that the first terminal device successfully receives the first data. The at least one terminal device includes the at least one first terminal device. The first control apparatus receives the feedback information from the at least one first terminal device.

Optionally, the first control apparatus, the second control apparatus, and the terminal device may be in a plurality of forms. This is not limited in this embodiment of this application.

In a possible implementation, the first control apparatus may be a cockpit domain controller (cockpit domain controller, CDC) in a cabin, the second control apparatus may be a non-vehicle-mounted terminal device, and the terminal device may be a vehicle-mounted terminal device.

In the conventional technology, a non-vehicle-mounted terminal device sends a physical layer signal to a vehicle-mounted terminal device, and the vehicle-mounted terminal device determines link quality between the non-vehicle-mounted terminal device and the vehicle-mounted terminal device by measuring strength of the physical layer signal and with reference to a signal measurement result, resulting in relatively high complexity. In addition, the vehicle-mounted terminal device needs to have a capability of measuring a physical layer signal, resulting in large costs.

According to the data transmission method provided in this embodiment of this application, link quality may be measured by transmitting the first data between the second control apparatus and the at least one terminal device, that is, the terminal device or the first control apparatus may determine link quality between the terminal device and the second control apparatus by determining whether the terminal device can successfully receive the first data from the second control apparatus. This can reduce complexity of link quality measurement, compared with the conventional technology in which link quality is measured by measuring a physical layer signal. In addition, the second control apparatus and the terminal device can measure link quality, provided that they have a data receiving and sending capability. This can reduce costs.

Further, the first control apparatus may select an appropriate terminal device based on the link quality between the second control apparatus and the at least one terminal device, so that the appropriate terminal device provides a relay service for data transmission between the first control apparatus and the second control apparatus. This can improve communication quality and communication efficiency.

It should be noted that, before the first control apparatus sends the first indication information to the second control apparatus, there is a communication link between the second control apparatus and the first control apparatus, and there is a communication link between the at least one terminal device and the first control apparatus.

Optionally, the first control apparatus may send the first indication information to the second control apparatus in a plurality of cases. This is not limited in this embodiment of this application.

In a possible implementation, the first control apparatus may send the first indication information to the second control apparatus when the link quality between the second control apparatus and the at least one terminal device needs to be measured.

In another possible implementation, the first control apparatus may send the first indication information to the second control apparatus when link quality between the first control apparatus and the second control apparatus is relatively poor (for example, a signal strength is less than a predetermined signal strength threshold).

In still another possible implementation, the first control apparatus may send the first indication information to the second control apparatus when a terminal device configured to provide a relay service needs to be selected for a link between the first control apparatus and the second control apparatus.

In other words, the first indication information may be used to indicate to measure the link quality between the second control apparatus and the at least one terminal device; or the first indication information may be used to indicate the second control apparatus to generate the first data that is to be sent to the at least one terminal device; or the first indication information may be used to indicate the second control apparatus to send the first data to the at least one terminal device; or the first indication information may be used to indicate to select, for the second control apparatus, a terminal device configured to provide a relay service.

In a possible implementation, the first indication information may be carried in a radio resource control (radio resource control, RRC) message.

Optionally, before the second control apparatus sends the first data to the at least one terminal device based on the first indication information, the first control apparatus may send first resource configuration information to the second control apparatus. The first resource configuration information is used to configure a first time-frequency resource used for data transmission between the second control apparatus and the at least one terminal device. Correspondingly, the second control apparatus may receive the first resource configuration information from the first control apparatus, and determine the first time-frequency resource based on the first resource configuration information.

It should be noted that, in this embodiment of this application, a link between the second control apparatus and the at least one terminal device is referred to as a sidelink, and a time-frequency resource allocated to the sidelink is referred to as a sidelink resource.

Correspondingly, the second control apparatus may send the first data to the at least one terminal device on the first time-frequency resource based on the first indication information.

Optionally, the second control apparatus may send the first data to the at least one terminal device in a plurality of manners. This is not limited in this embodiment of this application.

In a possible implementation, the second control apparatus may send the first data to each terminal device in the at least one terminal device.

In another possible implementation, the second control apparatus may multicast the first data to the at least one terminal device. The destination address of the first data is a multicast address of a terminal device group to which the at least one terminal device belongs.

Optionally, the address in this embodiment of this application may include at least one of the following: a media access control (media access control, MAC) address, an Internet protocol (Internet protocol address, IP) address, a soft address, or a short address.

It should be noted that the MAC address is an address used at a media access layer, and is also referred to as a physical address or a hardware address.

It should be further noted that the IP address is a logical address allocated to each network or device (the second control apparatus or the terminal device) on the Internet according to the IP protocol.

It should be further noted that the soft address may be an address that is allocated by the first control apparatus to a device (the second control apparatus or the terminal device) during last access of the device and that can uniquely identify the device in a communication domain.

It should be further noted that the short address may be an address obtained based on a part of at least one of the MAC address, the IP address, and the soft address.

In still another possible implementation, the second control apparatus may multicast the first data to the at least one terminal device. The first data is scrambled by using the multicast address of the terminal device group to which the at least one terminal device belongs.

In yet another possible implementation, the second control apparatus may broadcast the first data, and the destination address of the first data is a broadcast address.

According to the data transmission method provided in this embodiment of this application, the second control apparatus multicasts or broadcasts the first data. This can reduce a transmission delay, to improve measurement efficiency.

Optionally, the first data may indicate a function of the first data in an explicit or implicit manner. In other words, the first data may indicate in an explicit or implicit manner that the first data is used to measure the link quality between the second control apparatus and the at least one terminal device. This is not limited in this embodiment of this application.

In a possible implementation, for the implicit manner, for example, the at least one terminal device includes a first terminal device. The first data may include a source address and a destination address. The source address is an address of the second control apparatus, and the destination address is an address of the first terminal device. Correspondingly, the first terminal device may determine, based on a fact that the first data is sent by the second control apparatus to the first terminal device (and before the first data, the first terminal device has not received other data sent by the second control apparatus), that the first data is used to measure link quality between the second control apparatus and the first terminal device.

In another possible implementation, for the explicit manner, the first data may include management information and a source address. The management information is used to indicate that the first data is used to measure the link quality between the second control apparatus and the at least one terminal device or is used to indicate that the first data is used to measure link quality. The source address is an address of the second control apparatus. Correspondingly, the first terminal device may determine, based on the management information and a fact that the first data is sent by the second control apparatus, that the first data is used to measure link quality between the second control apparatus and the first terminal device.

In still another possible implementation, for the explicit manner, the first data may include management information, a source address, and a destination address. The management information is used to indicate that the first data is used to measure link quality between the source address and the destination address. The source address is an address of the second control apparatus. The destination address may be a unicast address, a multicast address, or a broadcast address of the at least one terminal device. Correspondingly, the first terminal device may determine, based on the management information and a fact that the first data is sent by the second control apparatus and the destination address is an address of the first terminal device, that the first data is used to measure link quality between the second control apparatus and the first terminal device.

In yet another possible implementation, for the explicit manner, the first data may include management information and a source address. The management information is used to indicate that the first data is heartbeat data. The heartbeat data may be used to measure link quality. The source address is an address of the second control apparatus. Correspondingly, the first terminal device may determine, based on the management information and a fact that the first data is sent by the second control apparatus, that the first data is used to measure link quality between the second control apparatus and the first terminal device.

In the first aspect, that the second control apparatus sends the first data to the at least one terminal device based on the first indication information includes: The second control apparatus sends the first
data to the at least one terminal device based on the first indication information and a transmission parameter. The transmission parameter includes at least one of a modulation and coding scheme, a coding rate, or transmit power used for the first data. Correspondingly, the at least one terminal device may receive the first data from the second control apparatus based on the transmission parameter.

Optionally, the second control apparatus and the at least one terminal device may obtain the transmission parameter in a plurality of manners. This is not limited in this embodiment of this application.

In a possible implementation, the first control apparatus may send parameter configuration information to the second control apparatus. The parameter configuration information is used to configure the transmission parameter. Correspondingly, the second control apparatus may receive the parameter configuration information from the first control apparatus, and configure the transmission parameter based on the parameter configuration information.

Similarly, the first control apparatus may send the parameter configuration information to the at least one terminal device. Correspondingly, the at least one terminal device may receive the parameter configuration information from the first control apparatus, and determine the transmission parameter based on the parameter configuration information.

Optionally, the parameter configuration information may be used to configure the transmission parameter in an explicit or implicit manner. This is not limited in this embodiment of this application.

In a possible implementation, for the explicit manner, the parameter configuration information may include the transmission parameter.

In another possible implementation, for the implicit manner, the parameter configuration information may include a first index value corresponding to the transmission parameter. Correspondingly, the second control apparatus may determine the transmission parameter based on the first index value and a preconfigured mapping relationship. The mapping relationship is used to indicate a plurality of index values and transmission parameters that are in a one-to-one correspondence with the plurality of index values. The plurality of index values include the first index value.

In still another possible implementation, for the implicit manner, the parameter configuration information may include a first index value range corresponding to the transmission parameter. Correspondingly, the second control apparatus may determine, based on the first index value range and a preconfigured mapping relationship, a transmission parameter corresponding to an index value in the index value range. The mapping relationship includes a plurality of index values and transmission parameters that are in a one-to-one correspondence with the plurality of index values, and a range of the plurality of index values is greater than or equal to the first index value range.

In another possible implementation, the second control apparatus may select one transmission parameter from a plurality of preconfigured transmission parameters as the transmission parameter.

It should be noted that, in the foregoing implementations, because the transmission parameter is determined by the second control apparatus and cannot be learned by the at least one terminal device, the second control apparatus needs to send or configure the transmission parameter to/for the at least one terminal device.

Optionally, the second control apparatus may send the transmission parameter to the at least one terminal device in a plurality of manners. This is not limited in this embodiment of this application.

In a possible implementation, before the second control apparatus sends the first data, the second control apparatus may send the parameter configuration information to the at least one terminal device. Correspondingly, the at least one terminal device may receive the parameter configuration information from the second control apparatus, and determine the transmission parameter based on the parameter configuration information.

In another possible implementation, the second control apparatus may use a control element of the first data to carry the parameter configuration information. Correspondingly, the at least one terminal device may obtain the transmission parameter from the control element of the first data.

Optionally, after the second control apparatus sends the first data to the at least one terminal device based on the first indication information, the at least one terminal device may determine the link quality between the second control apparatus and the at least one terminal device based on a first data receiving result. The receiving result includes a successful reception or an unsuccessful reception.

In a possible implementation, the terminal device may determine link quality between the terminal device and the second control apparatus based on the receiving result and the transmission parameter.

It should be noted that, in some of the foregoing possible implementations, there is a case in which a transmission parameter used for the first data is determined by the second control apparatus, and the first data does not include information used to indicate the transmission parameter. In this case, at least one first terminal device that successfully receives the first data and that is in the at least one terminal device, or the second control apparatus needs to separately notify the first control apparatus of the transmission parameter.

In a possible implementation, the at least one terminal device or the second control apparatus may send parameter indication information to the first control apparatus. The parameter indication information is used to indicate the transmission parameter used for the first data.

Optionally, the second control apparatus may continuously send a plurality of pieces of first data to the at least one terminal device. Correspondingly, the at least one first terminal device may send the feedback information to the first control apparatus. The feedback information of the first terminal device is used to feed back a success rate of receiving the first data by the first terminal device or a quantity of pieces of first data successfully received by the first terminal device.

Optionally, a step performed after the first control apparatus receives the feedback information of the at least one first terminal device is not limited in this embodiment of this application. In other words, a function of the feedback information of the at least one first terminal device is not limited in this embodiment of this application.

In a possible implementation, the method may further include: Based on the feedback information of the at least one first terminal device, the first control apparatus provides a reference for subsequent evaluation of a network status in a communication domain.

In another possible implementation, the method may further include: The first control apparatus determines link quality between the second control apparatus and the at least one first terminal device based on the feedback information of the at least one first terminal device.

Optionally, the first control apparatus may determine the link quality between the second control apparatus and the at least one first terminal device based on the feedback information of the at least one first terminal device and at least one of the transmission parameter or statistical information. The statistical information includes but is not limited to at least one of a current transmission bandwidth of a link between the second control apparatus and each first terminal device, a quantity of second control apparatuses that perform link quality measurement in a communication domain, or a quantity of terminal devices that access the first control apparatus.

In still another possible implementation, the method may further include: The first control apparatus determines, based on the feedback information of the at least one first terminal device, a target terminal device configured for the second control apparatus from the at least one first terminal device.

Optionally, there may be one or more target terminal devices. This is not limited in this embodiment of this application.

Optionally, the method may further include: The first control apparatus sends first relay configuration information to the second control apparatus. The first relay configuration information is used to configure a target terminal device for the second control apparatus. Correspondingly, the second control apparatus receives the first relay configuration information from the first control apparatus.

In other words, the second control apparatus may determine, based on the first relay configuration information, a target terminal device matching the second control apparatus, or determine a target terminal device that provides a relay service for the second control apparatus, or determine a target terminal device through which data is forwarded or transparently transmitted between the second control apparatus and the first control apparatus.

Optionally, the first relay configuration information may indicate the target terminal device in a plurality of manners. This is not limited in this embodiment of this application.

In a possible implementation, the first relay configuration information may include an address of the target terminal device.

In another possible implementation, the first relay configuration information may include a mapping relationship between the address of the second control apparatus and the address of the target terminal device.

Optionally, the target terminal device also needs to learn of the second control apparatus matching the target terminal device, or the target terminal device provides a relay service for the second control apparatus, to subsequently forward or transparently transmit data received from the second control apparatus.

Optionally, the method may further include: The target terminal device receives second relay configuration information. The second relay configuration information is used to configure the target terminal device, so that the target terminal device provides a relay service for the second control apparatus.

In a possible implementation, the first control apparatus may send the second relay configuration information to the target terminal device. Correspondingly, the target terminal device may receive the second relay configuration information from the first control apparatus.

In another possible implementation, the second control apparatus may send the second relay configuration information to the target terminal. Correspondingly, the target terminal device may receive the second relay configuration information from the second control apparatus.

Optionally, the first control apparatus may not send the first relay configuration information to the second control apparatus, but send the second relay configuration information to the target terminal device. Correspondingly, after the target terminal device receives the second relay configuration information from the second control apparatus, the target terminal device may send the first relay configuration information to the second control apparatus.

Optionally, the second relay configuration information may indicate the second control apparatus in a plurality of manners. This is not limited in this embodiment of this application.

In a possible implementation, the second relay configuration information may include the address of the second control apparatus.

In another possible implementation, the second relay configuration information may include a mapping relationship between the address of the second control apparatus and the address of the target terminal device.

By using the foregoing process, the target terminal device, the second control apparatus, and the first control apparatus may all learn that the second control apparatus matches the target terminal device. Subsequently, the target terminal device may provide a relay service for a link between the second control apparatus and the first control apparatus. Alternatively, the target terminal device may forward or transparently transmit data transmitted between the second control apparatus and the first control apparatus.

In a possible implementation, when the target terminal device is a terminal device whose uplink is idle, for example, a vehicle-mounted speaker, the target terminal device may provide a relay service for an uplink used by the second control apparatus to send data to the first control apparatus, or may forward and transparently transmit uplink data that is sent by the second control apparatus to the first control apparatus.

In another possible implementation, when the target terminal device is a terminal device whose downlink is idle, for example, a vehicle-mounted microphone, the target terminal device may provide a relay service for a downlink used by the first control apparatus to send data to the second control apparatus, or may forward and transparently transmit downlink data that is sent by the first control apparatus to the second control apparatus.

It should be noted that a terminal device whose uplink is idle in this embodiment of this application may be understood as that no data is transmitted on the uplink used by the terminal device to send data to the first control apparatus, or a data amount transmitted on the uplink is less than a preset threshold. Similarly, a terminal device whose downlink is idle may be understood as that no data is transmitted on the downlink used by the first control apparatus to send data to the terminal device, or a data amount transmitted on the downlink is less than a preset threshold. "A link is idle" is not specifically limited in this application. Refer to a definition in the conventional technology.

The following describes, by using an example in which the target terminal device is a terminal device whose uplink is idle, a process in which the target terminal device provides a relay service for an uplink used by the second control apparatus to send data to the first control apparatus, or forwards and transparently transmits uplink data that is sent by the second control apparatus to the first control apparatus.

Optionally, the method may further include: The second control apparatus sends second data to the target terminal device. A destination address of the second data is an address of the first control apparatus, and a source address of the second data is the address of the second control apparatus.

Correspondingly, the target terminal device may receive the second data from the second control apparatus, and forward or transparently transmit the second data to the first control apparatus based on the destination address.

It should be noted that the target terminal device may determine, based on the destination address of the second data, that the second data is not sent to the target terminal device, but is sent to the first control apparatus. Therefore, the target terminal device does not parse the second data, but directly forwards or transparently transmits the second data to the first control apparatus.

Correspondingly, the first control apparatus may receive the second data forwarded by the target terminal device.

It should be noted that the first control apparatus may determine, based on the source address of the second data, that the second data is not sent by the target terminal device to the first control apparatus, but is sent by the second control apparatus to the first control apparatus.

In a possible implementation, when the first time-frequency resource configured based on first time-frequency resource information includes a second time-frequency resource used to transmit the second data, the first control apparatus may send the second data to the target terminal device on the second time-frequency resource.

Optionally, the second control apparatus may send the second data to the target terminal device when a trigger condition is met. This is not limited in this embodiment of this application.

In other words, when the trigger condition is not met, the second control apparatus sends the second data to the first control apparatus in an original direct transmission mode (namely, a mode in which data is directly transmitted to the first control apparatus through an uplink and a downlink). On the contrary, when the trigger condition is met, the second control apparatus switches from the direct transmission mode to a relay mode (namely, a mode in which data is transmitted to the second control apparatus by using a relay), and sends the second data to the target terminal device. It should be noted that a single trigger condition is used as an example for description in this application. However, a combination of a plurality of trigger conditions for triggering mode switching also falls within the protection scope of this application. For example, the following trigger condition 1 and trigger condition 2 may be used separately or in combination.

Trigger condition 1: The first relay configuration information is received.

In a possible implementation, the second control apparatus may trigger, based on the first relay configuration information, to send the second data to the target terminal device.

Trigger condition 2: Transmission indication information is received.

In a possible implementation, the first control apparatus may send the transmission indication information to the second control apparatus. The transmission indication information is used to indicate to transmit data between the second control apparatus and the first control apparatus by using the target terminal device. Correspondingly, the second control apparatus may trigger, based on the transmission indication information, to send the second data to the target terminal device.

The following describes, by using an example in which the target terminal device is a terminal device whose downlink is idle, a process in which the target terminal device provides a relay service for a downlink used by the first control apparatus to send data to the second control apparatus, or forwards and transparently transmits downlink data that is sent by the first control apparatus to the second control apparatus.

Optionally, the method may further include: The first control apparatus sends third data to the target terminal device. A destination address of the third data is the address of the second control apparatus, and a source address of the third data is the address of the first control apparatus.

Correspondingly, the target terminal device may receive the third data from the first control apparatus, and forward or transparently transmit the third data to the second control apparatus based on the destination address.

It should be noted that the target terminal device may determine, based on the destination address of the third data, that the third data is not sent to the target terminal device, but is sent to the second control apparatus. Therefore, the target terminal device does not parse the third data, but directly forwards or transparently transmits the third data to the second control apparatus.

Correspondingly, the second control apparatus may receive the third data forwarded by the target terminal device.

It should be noted that the second control apparatus may determine, based on the source address of the third data, that the third data is not sent by the target terminal device to the second control apparatus, but is sent by the first control apparatus to the second control apparatus.

In a possible implementation, when the first time-frequency resource configured based on the first time-frequency resource information includes a third time-frequency resource used to transmit the third data, the second control apparatus may send the third data to the target terminal device on the third time-frequency resource.

Optionally, the first control apparatus may send the third data to the target terminal device when a trigger condition is met. This is not limited in this embodiment of this application.

In other words, when the trigger condition is not met, the first control apparatus sends the third data to the second control apparatus in an original direct transmission mode (namely, a mode in which data is directly transmitted to the second control apparatus through an uplink and a downlink). On the contrary, when the trigger condition is met, the first control apparatus switches from the direct transmission mode to a relay mode (namely, a mode in which data is transmitted to the second control apparatus by using a relay), and sends the third data to the target terminal device. It should be noted that a single trigger condition is used as an example for description in this application. However, a combination of a plurality of trigger conditions for triggering mode switching also falls within the protection scope of this application. For example, the following trigger condition 1, trigger condition 2, and trigger condition 3 may be used separately or in any combination.

Trigger condition 1: Link quality between the first control apparatus and the second control apparatus is relatively poor.

Trigger condition 2: A target terminal device is configured for the second control apparatus.

Trigger condition 3: Transmission indication information is received.

In a possible implementation, the second control apparatus may send the transmission indication information to the first control apparatus. The transmission indication information is used to indicate to transmit data between the second control apparatus and the first control apparatus by using the target terminal device. Correspondingly, the first control apparatus may trigger, based on the transmission indication information, to send the third data to the target terminal device.

According to a second aspect, an embodiment of this application further provides a data transmission method. The method includes: receiving first indication information from a first control apparatus; generating first data; and sending the first data to at least one terminal device based on the first indication information. The first data is used to measure link quality between a second control apparatus and the at least one terminal device.

In this aspect, the sending the first data to at least one terminal device based on the first indication information includes: sending the first data to the at least one terminal device based on the first indication information and a transmission parameter. The transmission parameter includes at least one of a modulation and coding scheme MCS, a coding rate, or transmit power used for the first data.

In a possible implementation, the transmission parameter is configured by using the first control apparatus.

In a possible implementation, the method further includes: receiving first relay configuration information from the first control apparatus. The first relay configuration information is used to configure a target terminal device for the second control apparatus, and the at least one terminal device includes the target terminal device.

In a possible implementation, the method further includes: sending second data to the target terminal device. A destination address of the second data is an address of the first control apparatus.

In a possible implementation, before the sending second data to the target terminal device, the method further includes: receiving transmission indication information from the first control apparatus. The transmission indication information is used to indicate to transmit data between the second control apparatus and the first control apparatus by using the target terminal device. The sending second data to the target terminal device includes: sending the second data to the target terminal device based on the transmission indication information.

In a possible implementation, the first data includes management information and a source address. The management information is used to indicate that the first data is used to measure link quality between the second control apparatus and the at least one terminal device, and the source address is an address of the second control apparatus.

In a possible implementation, the sending the first data to at least one terminal device based on the first indication information includes: multicasting the first data to the at least one terminal device based on the first indication information. The first data includes a multicast address of a terminal device group to which the at least one terminal device belongs.

According to a third aspect, an embodiment of this application further provides a data transmission method. The method includes: sending first indication information to a second control apparatus, where the first indication information is used to indicate to measure link quality between the second control apparatus and at least one terminal device; and receiving feedback information from at least one first terminal device, where the feedback information of the first terminal device is used to indicate that the first terminal device successfully receives first data from the second control apparatus, the first data is used to measure the link quality between the second control apparatus and the at least one terminal device, and the at least one terminal device includes the at least one first terminal device.

In a possible implementation, the method further includes: determining a target terminal device from the at least one first terminal device based on the feedback information of the at least one first terminal device.

In a possible implementation, the method further includes: sending first relay configuration information to the second control apparatus. The first relay configuration information is used to configure the target terminal device for the second control apparatus.

In a possible implementation, the method further includes: receiving second data from the target terminal device. A source address of the second data is an address of the second control apparatus.

In a possible implementation, before the receiving second data from the target terminal device, the method further includes: sending transmission indication information. The transmission indication information is used to indicate to transmit data between the second control apparatus and a first control apparatus by using the target terminal device.

In the third aspect, the method further includes: sending parameter configuration information to the second control apparatus. The parameter configuration information is used to configure a transmission parameter, and the transmission parameter includes at least one of a modulation and coding scheme MCS, a coding rate, or transmit power used for the first data.

In a possible implementation, the first data includes management information and a source address. The management information is used to indicate that the first data is used to measure link quality between the second control apparatus and the at least one terminal device, and the source address is the address of the second control apparatus.

According to a fourth aspect, an embodiment of this application further provides a data transmission method. The method includes: receiving first data from a second control apparatus, where the first data is used to measure link quality between the second control apparatus and at least one terminal device, and the at least one terminal device includes a target terminal device; and sending feedback information to a first control apparatus, where the feedback information is used to indicate that the target terminal device successfully receives the first data from the second control apparatus.

In this aspect, the receiving first data from a second control apparatus includes: receiving the first data from the second control apparatus based on a transmission parameter. The transmission parameter includes at least one of a modulation and coding scheme MCS, a coding rate, or transmit power used for the first data.

In this aspect, the transmission parameter is configured by using the first control apparatus.

In a possible implementation, the method further includes: receiving second relay configuration information. The second relay configuration information is used to configure the target terminal device, so that the target terminal device provides a relay service for the second control apparatus.

In a possible implementation, the method further includes: receiving second data from the second control apparatus, where a destination address of the second data is an address of the first control apparatus; and forwarding the second data to the first control apparatus based on the destination address.

In a possible implementation, before the forwarding the second data to the first control apparatus based on the destination address, the method further includes: receiving transmission indication information from the first control apparatus, where the transmission indication information is used to indicate to transmit data between the second control apparatus and the first control apparatus by using the target terminal device. The forwarding the second data to the first control apparatus based on the destination address includes: forwarding the second data to the first control apparatus based on the destination address and the transmission indication information.

In a possible implementation, the first data includes management information and a source address. The management information is used to indicate that the first data is used to measure link quality between the second control apparatus and the at least one terminal device, and the source address is an address of the second control apparatus.

In a possible implementation, the receiving first data from a second control apparatus includes: receiving the first data multicast by the second control apparatus. The first data includes a multicast address of a terminal device group to which the at least one terminal device belongs.

According to a fifth aspect, an embodiment of this application further provides a data transmission apparatus, configured to perform the method according to any one of the foregoing aspects or the possible implementations of the foregoing aspects. Specifically, the data transmission apparatus may include a unit configured to perform the method according to any one of the foregoing aspects or the possible implementations of the foregoing aspects.

Optionally, the data transmission apparatus may be the second control apparatus, the first control apparatus, or the terminal device.

According to a sixth aspect, an embodiment of this application further provides a data transmission apparatus. The apparatus includes a memory, at least one processor, a transceiver, and instructions that are stored in the memory and that can be run on the processor. Further, the memory, the processor, and a communication interface communicate with each other through an internal connection path. The at least one processor executes the instructions, so that the data transmission apparatus implements the method according to any one of the foregoing aspects or the possible implementations of the foregoing aspects.

Optionally, the data transmission apparatus may be the second control apparatus, the first control apparatus, or the terminal device.

According to a non-claimed seventh aspect, this application further provides a computer-readable storage medium, configured to store a computer program. The computer program is configured to implement the method according to any one of the foregoing aspects or the possible implementations of the foregoing aspects.

According to an non-claimed eighth aspect, an embodiment of this application further provides a computer program product including instructions. When the computer program product runs on a computer, the computer is enabled to implement the method according to any one of the foregoing aspects or the possible implementations of the foregoing aspects.

According to a ninth aspect, an embodiment of this application further provides a chip apparatus, including an input interface, an output interface, and at least one processor. Optionally, the chip apparatus further includes a memory. The at least one processor is configured to execute code in the memory. When the at least one processor executes the code, the chip apparatus implements the method according to any one of the foregoing aspects or the possible implementations of the foregoing aspects.

Optionally, a data transmission apparatus may be the second control apparatus, the first control apparatus, or a chip apparatus or an integrated circuit in the terminal device.

According to a non-claimed tenth aspect, an embodiment of this application further provides a cockpit system, including at least one of the first control apparatus, the second control apparatus, and the at least one terminal device according to the sixth aspect, or including at least one of the first control apparatus, the second control apparatus, and the chip apparatus or the integrated circuit in the at least one terminal device according to the ninth aspect.

The data transmission method, the data transmission apparatus, the computer storage medium, the computer program product, the chip, and the cockpit system provided in embodiments are all configured to perform the data transmission method provided above. Therefore, for advantageous effects that can be achieved, refer to advantageous effects in the data transmission method provided above. Details are not described herein again.

### BRIEF DESCRIPTION OF DRAWINGS

FIG. 1 is a schematic block diagram of a communication system 100 according to an embodiment of this application;
FIG. 2 is a schematic flowchart of a data transmission method 200 according to an embodiment of this application;
FIG. 3 is a schematic block diagram of a data transmission apparatus 300 according to an embodiment of this application;
FIG. 4 is a schematic block diagram of a data transmission apparatus 400 according to an embodiment of this application;
FIG. 5 is a schematic block diagram of a data transmission apparatus 500 according to an embodiment of this application; and
FIG. 6 is a schematic block diagram of a chip 600 according to an embodiment of this application.

### DESCRIPTION OF EMBODIMENTS

The following describes the technical solutions of this application with reference to the accompanying drawings.

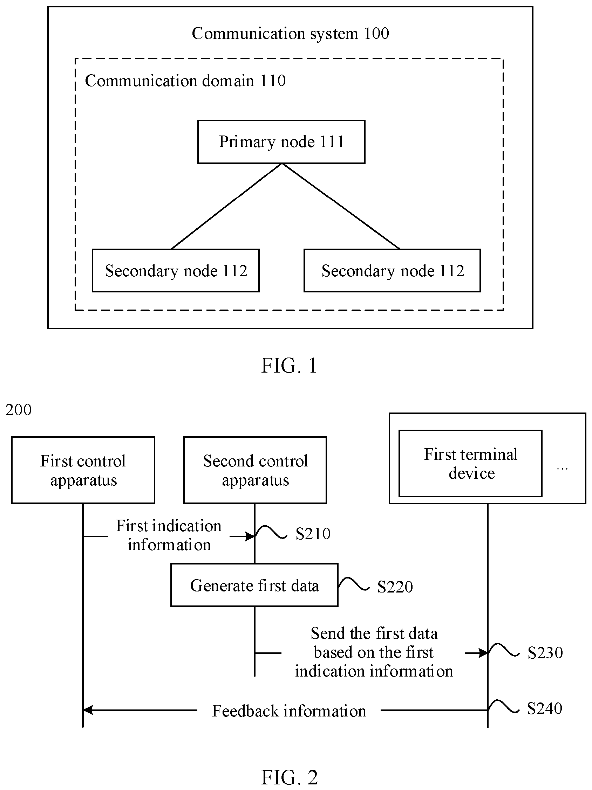

FIG. 1 is a schematic block diagram of a communication system 100 according to an embodiment of this application. The communication system 100 includes at least one communication domain. FIG. 1 shows a communication domain 110. The communication domain 110 includes a primary node 111 and a plurality of secondary nodes 112.

It should be noted that the primary node 111 in this embodiment of this application is an apparatus that can communicate with the secondary node 112 and has a capability of managing the secondary node 112 (for example, scheduling a resource for the secondary node 112).

It should be further noted that the secondary node 112 in this embodiment of this application is an apparatus that can follow management of the primary node 111 and has a capability of performing communication by using a resource allocated by the primary node 111.

Optionally, the communication domain 110 is applicable to a plurality of environments. This is not limited in this embodiment of this application.

In a possible implementation, the communication domain 110 is applicable to a cockpit (also referred to as a cabin) environment of a motor vehicle (for example, an intelligent vehicle, an electric vehicle, or a digital vehicle).

In another possible implementation, the communication domain 110 is applicable to a smart home environment.

Optionally, the primary node 111 may communicate with the secondary node 112 in a plurality of manners. This is not limited in this embodiment of this application.

In a possible implementation, the primary node 111 may communicate with the secondary node 112 in a wired manner.

It should be noted that the foregoing wired manner may be implementing communication through a data cable connection or an internal bus connection.

In another possible implementation, the primary node 111 may communicate with the secondary node 112 in a wireless manner.

It should be noted that the foregoing wireless manner may be implementing communication through a communication network. The communication network may be a local area network, or may be a wide area network transferred by using a relay (relay) device, or may include a local area network and a wide area network. For example, when the communication network is a local area network, the communication network may be a Wi-Fi hotspot network, a Wi-Fi P2P network, a Bluetooth network, a ZigBee network, a near field communication (near field communication, NFC) network, or a possible future universal short-range communication network. For example, when the communication network is a wide area network, the communication network may be a 3rd-generation mobile communication technology (3rd-generation wireless telephone technology, 3G) network, the 4th-generation mobile communication technology (the 4th-generation mobile communication technology, 4G) network, a 5th-generation mobile communication technology (5th-generation mobile communication technology, 5G) network, a PLMN, or the Internet. This is not limited in this embodiment of this application.

In a possible implementation, the primary node 111 may be a network control apparatus, and the secondary node 112 may be a terminal device.

Optionally, the network control apparatus may be in a plurality of forms. This is not limited in this embodiment of this application.

In a possible implementation, the network control apparatus may be an independent device.

In another possible implementation, the network control apparatus may be integrated into another device as a functional module or a chip apparatus.

It should be noted that the network control apparatus in this embodiment of this application may also be referred to as an access device or a radio access network device, may be an evolved NodeB (evolved NodeB, eNB or eNodeB) in a long term evolution (long term evolution, LTE) system, or may be a radio controller in a cloud radio access network (cloud radio access network, CRAN) scenario. Alternatively, the access device may be a relay station, an access point, a vehicle-mounted device, a wearable device, an access device in a 5G network, or a network device in a future evolved public land mobile network (public land mobile network, PLMN), may be an access point (access point, AP) in a wireless local area network (wireless local area network, WLAN), may be a gNB in a new radio (new radio, NR) system, or the like. This is not limited in this embodiment of this application.

Optionally, the access device is a device in a radio access network (radio access network, RAN), or a RAN node through which a terminal accesses a wireless network. By way of example but not limitation, an access network device may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (base band unit, BBU), a wireless fidelity (wireless fidelity, Wi-Fi) access point (access point, AP), or the like. In a network structure, a network device may include a centralized unit (centralized unit, CU) node or a distributed unit (distributed unit, DU) node, a RAN device including a CU node and a DU node, or a RAN device including a CU control plane node (CU-CP node), a CU user plane node (CU-UP node), and a DU node.

Optionally, the terminal device may be in a plurality of forms. This is not limited in this embodiment of this application.

In a possible implementation, the terminal device may be an independent device.

In another possible implementation, the terminal device may be integrated into another device as a functional module or a chip apparatus.

It should be noted that the terminal device in this embodiment of this application may be a device that provides voice/data connectivity for a user, for example, a handheld device or a vehicle-mounted device with a wireless connection function. Currently, some examples of the terminal device are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in self-driving (self-driving), a cellular phone, a cordless phone, a session initiation protocol (session initiation protocol, SIP) phone, a personal digital assistant (personal digital assistant, PDA), a handheld device with a wireless communication function, a computing device, a vehicle-mounted device, a smart home device, a wearable device, a terminal device in a 5G network, and a terminal device in a future evolved public land mobile network (public land mobile network, PLMN). This is not limited in this embodiment of this application.

It should be further noted that the wearable device may also be referred to as a wearable intelligent device, and is a general term of wearable devices such as glasses, gloves, watches, clothes, and shoes that are developed by applying wearable technologies in intelligent designs of daily wear. The wearable device is a portable device that can be directly worn on the body or integrated into clothes or an accessory of a user.

In a possible implementation, that the communication domain 110 is applicable to a cockpit domain environment is used as an example. Based on a relationship between a terminal device and a cockpit, the terminal device may include the following two terminal types: a "vehicle-mounted terminal device" and a "non-vehicle-mounted terminal device".

The "vehicle-mounted terminal device", also referred to as an on-board unit (on-board unit, OBU), is a device that is integrated or installed in a cockpit domain and that belongs to a part of the cockpit domain, for example, a vehicle-mounted speaker, a vehicle-mounted microphone, a vehicle-mounted display, and a vehicle-mounted camera. Generally, the vehicle-mounted terminal device may be a device factory-installed (factory-installed) on a vehicle by a vehicle manufacturer.

The "non-vehicle-mounted terminal device" is a device that is placed in a cockpit domain and that can communicate with or connect to another device in the cockpit domain, but does not belong to a part of the cockpit, for example, an intelligent terminal, a tablet computer, a Bluetooth headset, or a wearable device of a user.

In a possible implementation, the network control apparatus may be a cockpit domain controller (cockpit domain controller, CDC). The CDC may communicate with a plurality of terminal devices, and the plurality of terminal devices may include at least one terminal type of the vehicle-mounted terminal device or the non-vehicle-mounted terminal device.

In a cockpit domain, when the non-vehicle-mounted terminal device communicates with the CDC in a wireless manner, channel fading between the non-vehicle-mounted terminal device and the CDC may occur due to blockage by a seat or a body of another passenger. Therefore, communication quality and communication efficiency are affected. In the foregoing channel fading scenario, how to improve communication efficiency and communication quality between a non-vehicle terminal device and a CDC is an urgent problem to be currently resolved in a cabin domain.

Because most links between the vehicle-mounted terminal device and the CDC are optimized, channel quality is relatively high and relatively stable. In this case, it may be considered that the vehicle-mounted terminal device is used as a relay node to provide a relay service for communication between the non-vehicle-mounted terminal device and the CDC.

In a possible implementation, in a process in which the CDC controls a vehicle-mounted speaker to play audio data, the CDC sends the audio data to the vehicle-mounted speaker through a downlink between the CDC and the vehicle-mounted speaker. In the foregoing process, an uplink between the vehicle-mounted speaker and the CDC is basically idle. Therefore, it may be considered that the uplink between the vehicle-mounted speaker and the CDC is used to transmit uplink data of the non-vehicle-mounted device, that is, the vehicle-mounted speaker is configured to provide a relay service for a link between the non-vehicle terminal device and the CDC.

In another possible implementation, in a process in which the CDC controls a vehicle-mounted microphone to collect voice data of a user, the vehicle-mounted microphone sends the voice data to the CDC through a downlink between the vehicle-mounted microphone and the CDC. In the foregoing process, the downlink between the CDC and the vehicle-mounted microphone is basically idle. Therefore, it may be considered that the downlink between the CDC and the vehicle-mounted microphone is used to transmit downlink data of the non-vehicle-mounted device, that is, the vehicle-mounted microphone is configured to provide a relay service for a link between the non-vehicle-mounted terminal device and the CDC.

However, there may be a case in which a plurality of vehicle-mounted terminal devices can provide a relay service for the link between the non-vehicle-mounted terminal device and the CDC in a cabin domain. In this case, the CDC needs to measure link quality between the non-vehicle-mounted terminal device and the plurality of vehicle-mounted terminal devices, and select a vehicle-mounted terminal device with good link quality, so that the vehicle-mounted terminal device provides a relay service for the link between the non-vehicle-mounted terminal device and the CDC.

In an existing relay selection method, a non-vehicle-mounted terminal device may send a physical layer signal to a vehicle-mounted terminal device, and the vehicle-mounted terminal device determines link quality between the non-vehicle-mounted terminal device and the vehicle-mounted terminal device by measuring strength of the physical layer signal and with reference to a signal measurement result.

However, by using the existing relay selection method, the vehicle-mounted terminal device needs to measure the physical layer signal to implement link quality measurement, resulting in relatively high complexity. In addition, the vehicle-mounted terminal device needs to have a capability of measuring a physical layer signal, resulting in large costs.

Embodiments of this application provide a data transmission method and apparatus. This can reduce complexity of link quality measurement.

FIG. 2 is a schematic flowchart of a data transmission method 200 according to an embodiment of this application. The method 200 is applicable to the communication system 100 shown in FIG. 1, and is applicable to the foregoing relay selection scenario.

S210: A first control apparatus sends first indication information to a second control apparatus. The first indication information is used to indicate to measure link quality between the second control apparatus and at least one terminal device. Correspondingly, the second control apparatus receives the first indication information from the first control apparatus.

In a possible implementation, the first control apparatus may correspond to the network control apparatus in FIG. 1, the second control apparatus may correspond to the non-vehicle-mounted terminal device in FIG. 1, and the terminal device may correspond to the vehicle-mounted terminal device in FIG. 1.

It should be noted that before S210, there is a communication link between the second control apparatus and the first control apparatus, and there is a communication link between the at least one terminal device and the first control apparatus.

Optionally, the first control apparatus may send the first indication information to the second control apparatus in a plurality of cases. This is not limited in this embodiment of this application.

In a possible implementation, the first control apparatus may send the first indication information to the second control apparatus when the link quality between the second control apparatus and the at least one terminal device needs to be measured.

In another possible implementation, the first control apparatus may send the first indication information to the second control apparatus when link quality between the first control apparatus and the second control apparatus is relatively poor (for example, a signal strength is less than a predetermined signal strength threshold).

In still another possible implementation, the first control apparatus may send the first indication information to the second control apparatus when a terminal device configured to provide a relay service needs to be selected for a link between the first control apparatus and the second control apparatus.

In other words, the first indication information may be used to indicate to measure the link quality between the second control apparatus and the at least one terminal device; or the first indication information may be used to indicate the second control apparatus to generate first data that is to be sent to the at least one terminal device; or the first indication information may be used to indicate the second control apparatus to send first data to the at least one terminal device, or the first indication information may be used to indicate to select, for the second control apparatus, a terminal device configured to provide a relay service.

In a possible implementation, the first indication information may be carried in a radio resource control (radio resource control, RRC) message.

S220: The second control apparatus generates the first data.

S230: The second control apparatus sends the first data to the at least one terminal device based on the first indication information. The first data is used to measure the link quality between the second control apparatus and the at least one terminal device. Correspondingly, the at least one terminal device receives the first data from the second control apparatus.

Optionally, before S230, the first control apparatus may send first resource configuration information to the second control apparatus. The first resource configuration information is used to configure a first time-frequency resource used for data transmission between the second control apparatus and the at least one terminal device. Correspondingly, the second control apparatus may receive the first resource configuration information from the first control apparatus, and determine the first time-frequency resource based on the first resource configuration information.

It should be noted that, in this embodiment of this application, a link between the second control apparatus and the at least one terminal device is referred to as a sidelink (sidelink), and a time-frequency resource allocated to the sidelink is referred to as a sidelink resource.

Correspondingly, S230 may include: The second control apparatus sends the first data to the at least one terminal device on the first time-frequency resource based on the first indication information.

Optionally, the second control apparatus may send the first data to the at least one terminal device in a plurality of manners. This is not limited in this embodiment of this application.

In a possible implementation, the second control apparatus may send the first data to each terminal device in the at least one terminal device.

A first terminal device in the at least one terminal device is used as an example. The second control apparatus may send the first data to the first terminal device. A destination address of the first data is an address of the first terminal device.

Optionally, the address in this embodiment of this application may include at least one of the following: a media access control (media access control, MAC) address, an Internet protocol (Internet protocol address, IP) address, a soft address, or a short address.

It should be noted that the MAC address is an address used at a media access layer, and is also referred to as a physical address or a hardware address.

It should be further noted that the IP address is a logical address allocated to each network or device (the second control apparatus or the terminal device) on the Internet according to the IP protocol.

It should be further noted that the soft address may be an address that is allocated by the first control apparatus to a device (the second control apparatus or the terminal device) during last access of the device and that can uniquely identify the device in a communication domain.

It should be further noted that the short address may be an address obtained based on a part of at least one of the MAC address, the IP address, and the soft address.

For example, the first control apparatus may generate the short address by using 10 least significant bits of any one of the foregoing addresses of the device, and the generated short address can uniquely identify the device in a communication domain.

In another possible implementation, the second control apparatus may multicast the first data to the at least one terminal device. The destination address of the first data is a multicast address of a terminal device group to which the at least one terminal device belongs.

It should be noted that a same multicast address may be allocated to terminal devices belonging to a same terminal device group, and a message sent for the address can be identified and received by the group of terminal devices.

For example, the plurality of terminal devices include a vehicle-mounted speaker 1 and a vehicle-mounted speaker 2. The vehicle-mounted speaker 1 and the vehicle-mounted speaker 2 belong to a first terminal device group. The first data includes a multicast address of the first terminal device group. Correspondingly, the vehicle-mounted speaker 1 and the vehicle-mounted speaker 2 can identify and receive the first data based on the multicast address corresponding to the first terminal device group to which the vehicle-mounted speaker 1 and the vehicle-mounted speaker 2 belong.

Optionally, the first data may further include quantity information, and the quantity information is used to indicate a quantity of terminal devices corresponding to the multicast address.

In still another possible implementation, the second control apparatus may multicast the first data to the at least one terminal device. The first data is scrambled by using a multicast address of a terminal device group to which the at least one terminal device belongs.

It should be noted that a same multicast address may be allocated to terminal devices belonging to a same terminal device group, and data scrambled by using the multicast address can be descrambled and received by the group of terminal devices.

For example, the plurality of terminal devices include a vehicle-mounted speaker 1 and a vehicle-mounted speaker 2. The vehicle-mounted speaker 1 and the vehicle-mounted speaker 2 belong to a first terminal device group. The first data is scrambled by using a multicast address of the first terminal device group. Correspondingly, the vehicle-mounted speaker 1 and the vehicle-mounted speaker 2 can descramble and receive the first data based on the multicast address corresponding to the first terminal device group to which the vehicle-mounted speaker 1 and the vehicle-mounted speaker 2 belong.

In still another possible implementation, the second control apparatus may broadcast the first data, and a destination address of the first data is a broadcast address.

For example, the first data may be carried in a broadcast message of a sidelink, and the broadcast message of the sidelink may be a master information block (master information block, MIB) message or a system information block (system information block, SIB) message.

For another example, the first data may be carried in a broadcast-type data packet, for example, a MAC protocol data unit (protocol data unit, PDU) with a destination address whose bits are all 1.

According to the data transmission method provided in this embodiment of this application, the second control apparatus multicasts or broadcasts the first data. This can reduce a transmission delay, to improve measurement efficiency.

Optionally, the first data may indicate a function of the first data in an explicit or implicit manner. In other words, the first data may indicate, in an explicit or implicit manner, that the first data is used to measure the link quality between the second control apparatus and the at least one terminal device. This is not limited in this embodiment of this application.

In a possible implementation, for the implicit manner, for example, the at least one terminal device includes a first terminal device. The first data may include a source address and a destination address. The source address is an address of the second control apparatus, and the destination address is an address of the first terminal device. Correspondingly, the first terminal device may determine, based on a fact that the first data is sent by the second control apparatus to the first terminal device (and before the first data, the first terminal device has not received other data sent by the second control apparatus), that the first data is used to measure link quality between the second control apparatus and the first terminal device.

In another possible implementation, for the explicit manner, for example, the at least one terminal device includes a first terminal device. The first data may include management information and a source address. The management information is used to indicate that the first data is used to measure link quality, and the source address is an address of the second control apparatus. Correspondingly, the first terminal device may determine, based on the management information and a fact that the first data is sent by the second control apparatus, that the first data is used to measure link quality between the second control apparatus and the first terminal device.

In still another possible implementation, for the explicit manner, the first data may include management information, a source address, and a destination address. The management information is used to indicate that the first data is used to measure link quality between the source address and the destination address. The source address is an address of the second control apparatus. The destination address may be a unicast address, a multicast address, or a broadcast address of the at least one terminal device. Correspondingly, the first terminal device may determine, based on the management information and a fact that the first data is sent by the second control apparatus and the destination address is the address of the first terminal device, that the first data is used to measure link quality between the second control apparatus and the first terminal device.

In still another possible implementation, for the explicit manner, the first data may include management information and a source address. The management information is used to indicate that the first data is heartbeat data (beacon). The heartbeat data may be used to measure link quality. The source address is an address of the second control apparatus. Correspondingly, the first terminal device may determine, based on the management information and a fact that the first data is sent by the second control apparatus, that the first data is used to measure link quality between the second control apparatus and the first terminal device.

In S230, the second control apparatus sends the first data to the at least one terminal device based on the first indication information and a transmission parameter. The transmission parameter includes at least one of a modulation and coding scheme (modulation and coding scheme, MCS), a coding rate (coding rate), or transmit power used for the first data. Correspondingly, the at least one terminal device may receive the first data from the second control apparatus based on the transmission parameter.

Optionally, the second control apparatus and the at least one terminal device may obtain the transmission parameter in a plurality of manners. This is not limited in this embodiment of this application.

In a possible implementation, the first control apparatus may send parameter configuration information to the second control apparatus. The parameter configuration information is used to configure the transmission parameter. Correspondingly, the second control apparatus may receive the parameter configuration information from the first control apparatus, and configure the transmission parameter based on the parameter configuration information.

Similarly, the first control apparatus may send the parameter configuration information to the at least one terminal device. Correspondingly, the at least one terminal device may receive the parameter configuration information from the first control apparatus, and determine the transmission parameter based on the parameter configuration information.

Optionally, the parameter configuration information may be used to configure the transmission parameter in an explicit or implicit manner. This is not limited in this embodiment of this application.

In a possible implementation, for the explicit manner, the parameter configuration information may include the transmission parameter.

In another possible implementation, for the implicit manner, the parameter configuration information may include a first index value corresponding to the transmission parameter. Correspondingly, the second control apparatus may determine the transmission parameter based on the first index value and a preconfigured mapping relationship. The mapping relationship is used to indicate a plurality of index values and a plurality of transmission parameters that are in a one-to-one correspondence with the plurality of index values. The plurality of index values include the first index value.

In still another possible implementation, for the implicit manner, the parameter configuration information may include a first index value range corresponding to the transmission parameter. Correspondingly, the second control apparatus may determine, based on the first index value range and a preconfigured mapping relationship, a transmission parameter corresponding to one index value in the first index value range as the transmission parameter. The mapping relationship includes a plurality of index values and a plurality of transmission parameters that are in a one-to-one correspondence with the plurality of index values. A range of the plurality of index values is greater than or equal to the first index value range.

In another possible implementation, the second control apparatus may select one transmission parameter from a plurality of preconfigured transmission parameters as the transmission parameter.

For example, the second control apparatus may determine, as the transmission parameter used for the first data, a transmission parameter including at least one of a largest MCS or a highest coding rate in a transmission parameter list.

It should be noted that, in the foregoing implementations, because the transmission parameter is determined by the second control apparatus and cannot be learned of by the at least one terminal device, the second control apparatus needs to send or configure the transmission parameter to/for the at least one terminal device.

Optionally, the second control apparatus may send the transmission parameter to the at least one terminal device in a plurality of manners. This is not limited in this embodiment of this application.

In a possible implementation, before the second control apparatus sends the first data, the second control apparatus may send the parameter configuration information to the at least one terminal device. Correspondingly, the at least one terminal device may receive the parameter configuration information from the second control apparatus, and determine the transmission parameter based on the parameter configuration information.

In another possible implementation, the second control apparatus may use a control element (Control element) of the first data to carry the parameter configuration information. Correspondingly, the at least one terminal device may obtain the transmission parameter from the control element of the first data.

Optionally, after S230, the at least one terminal device may determine the link quality between the second control apparatus and the at least one terminal device based on a first data receiving result. The receiving result includes a successful reception or an unsuccessful reception.

In a possible implementation, the terminal device may determine link quality between the terminal device and the second control apparatus based on the receiving result and the transmission parameter.

For example, that at least one first terminal device in the at least one terminal device successfully receives the first data is used as an example. The first terminal device may determine, based on the MCS used for the first data, that current link quality can meet at least the MCS. Alternatively, the first terminal device may determine, based on the coding rate used for the first data, that current link quality can meet at least the coding rate. A larger MCS of the first data indicates better link quality. Alternatively, a higher coding rate of the first data indicates better link quality.

For another example, that at least one first terminal device in the at least one terminal device successfully receives the first data is used as an example. The first terminal device may determine, based on the MCS and the coding rate that are used for the first data, that current link quality can meet at least the MCS and the coding rate.

For another example, that at least one second terminal device in the at least one terminal device fails to receive the first data is used as an example. The second terminal device may determine, based on the MCS used for the first data, that current link quality is insufficient to meet the MCS. Alternatively, the second terminal device may determine, based on the coding rate used for the first data, that current link quality is insufficient to meet the coding rate.

For another example, that at least one second terminal device in the at least one terminal device fails to receive the first data is used as an example. The second terminal device may determine, based on the MCS and the coding rate that are used for the first data, that current link quality is insufficient to meet the MCS and the coding rate.

According to the data transmission method provided in this embodiment of this application, link quality may be measured by transmitting the first data between the second control apparatus and the at least one terminal device, that is, the terminal device or the first control apparatus may determine link quality between the terminal device and the second control apparatus by determining whether the terminal device can successfully receive the first data from the second control apparatus. This can reduce complexity of link quality measurement, compared with the conventional technology in which link quality is measured by measuring a physical layer signal. In addition, the second control apparatus and the terminal device can measure link quality, provided that they have a data receiving and sending capability. This can reduce costs.

Further, the first control apparatus may select an appropriate terminal device based on the link quality between the second control apparatus and the at least one terminal device, so that the appropriate terminal device provides a relay service for data transmission between the first control apparatus and the second control apparatus. This can improve communication quality and communication efficiency.

S240: At least one first terminal device sends feedback information to the first control apparatus. The feedback information of the first terminal device is used to indicate that the first terminal device successfully receives the first data. The at least one terminal device includes the at least one first terminal device. Correspondingly, the first control apparatus receives the feedback information from the at least one first terminal device.

Optionally, the at least one first terminal device may be a terminal device that is in the at least one terminal device and that successfully receives the first data.

It should be noted that, in some possible implementations of S230, there is a case in which the transmission parameter used for the first data is determined by the second control apparatus, and the first data does not include information used to indicate the transmission parameter. In this case, the at least one first terminal device or the second control apparatus needs to separately notify the first control apparatus of the transmission parameter.

In a possible implementation, the at least one terminal device or the second control apparatus may send parameter information to the first control apparatus. The parameter information is used to indicate the transmission parameter.

Optionally, in S230, the second control apparatus may continuously send a plurality of pieces of first data to the at least one terminal device. Correspondingly, in S240, the at least one first terminal device may send the feedback information to the first control apparatus. The feedback information of the first terminal device is used to feed back a success rate of receiving the first data by the first terminal device or a quantity of pieces of first data successfully received by the first terminal device.

Optionally, a step performed after the first control apparatus receives the feedback information of the at least one first terminal device is not limited in this embodiment of this application. In other words, a function of the feedback information of the at least one first terminal device is not limited in this embodiment of this application.

In a possible implementation, the method 200 may further include: Based on the feedback information of the at least one first terminal device, the first control apparatus provides a reference for subsequent evaluation of a network status in a communication domain.

In another possible implementation, the method 200 may further include: The first control apparatus determines link quality between the second control apparatus and the at least one first terminal device based on the feedback information of the at least one first terminal device.

Optionally, the first control apparatus may determine the link quality between the second control apparatus and the at least one first terminal device based on the feedback information of the at least one first terminal device and at least one of the transmission parameter or statistical information. The statistical information includes but is not limited to at least one of a current transmission bandwidth of a link between the second control apparatus and each first terminal device, a quantity of second control apparatuses that perform link quality measurement in a communication domain, or a quantity of terminal devices that access the first control apparatus.

In still another possible implementation, the method 200 may further include: The first control apparatus determines, based on the feedback information of the at least one first terminal device, a target terminal device configured for the second control apparatus from the at least one first terminal device.

Optionally, there may be one or more target terminal devices. This is not limited in this embodiment of this application.

For example, when a quantity of the at least one first terminal device is greater than 1, the first control apparatus may determine, as the target terminal device, one or more first terminal devices that maintain the best link quality with the second control apparatus and that are in the at least one first terminal device.

Optionally, the method 200 may further include: The first control apparatus sends first relay configuration information to the second control apparatus. The first relay configuration information is used to configure a target terminal device for the second control apparatus. Correspondingly, the second control apparatus receives the first relay configuration information from the first control apparatus.

In other words, the second control apparatus may determine, based on the first relay configuration information, a target terminal device matching the second control apparatus, or determine a target terminal device that provides a relay service for the second control apparatus, or determine a target terminal device through which data is forwarded or transparently transmitted between the second control apparatus and the first control apparatus.

Optionally, the first relay configuration information may indicate the target terminal device in a plurality of manners. This is not limited in this embodiment of this application.

In a possible implementation, the first relay configuration information may include an address of the target terminal device.

In another possible implementation, the first relay configuration information may include a mapping relationship between the address of the second control apparatus and the address of the target terminal device.

Optionally, the target terminal device also needs to learn of the second control apparatus matching the target terminal device, or the target terminal device provides a relay service for the second control apparatus, to subsequently forward or transparently transmit data received from the second control apparatus.

Optionally, the method 200 may further include: The target terminal device receives second relay configuration information. The second relay configuration information is used to configure the target terminal device, so that the target terminal device provides a relay service for the second control apparatus.

In a possible implementation, the first control apparatus may send the second relay configuration information to the target terminal device. Correspondingly, the target terminal device may receive the second relay configuration information from the first control apparatus.

In another possible implementation, the second control apparatus may send the second relay configuration information to the target terminal. Correspondingly, the target terminal device may receive the second relay configuration information from the second control apparatus.

Optionally, the first control apparatus may not send the first relay configuration information to the second control apparatus, but send the second relay configuration information to the target terminal device. Correspondingly, after the target terminal device receives the second relay configuration information from the second control apparatus, the target terminal device may send the first relay configuration information to the second control apparatus.

Optionally, the second relay configuration information may indicate the second control apparatus in a plurality of manners. This is not limited in this embodiment of this application.

In a possible implementation, the second relay configuration information may include the address of the second control apparatus.

In another possible implementation, the second relay configuration information may include a mapping relationship between the address of the second control apparatus and the address of the target terminal device.

By using the foregoing process, the target terminal device, the second control apparatus, and the first control apparatus may all learn that the second control apparatus matches the target terminal device. Subsequently, the target terminal device may provide a relay service for a link between the second control apparatus and the first control apparatus. Alternatively, the target terminal device may forward or transparently transmit data transmitted between the second control apparatus and the first control apparatus.

In a possible implementation, when the target terminal device is a terminal device whose uplink is idle, for example, a vehicle-mounted speaker, the target terminal device may provide a relay service for an uplink used by the second control apparatus to send data to the first control apparatus, or may forward and transparently transmit uplink data that is sent by the second control apparatus to the first control apparatus.

In another possible implementation, when the target terminal device is a terminal device whose downlink is idle, for example, a vehicle-mounted microphone, the target terminal device may provide a relay service for a downlink used by the first control apparatus to send data to the second control apparatus, or may forward and transparently transmit downlink data that is sent by the first control apparatus to the second control apparatus.

It should be noted that a terminal device whose uplink is idle in this embodiment of this application may be understood as that no data is transmitted on the uplink used by the terminal device to send data to the first control apparatus, or a data amount transmitted on the uplink is less than a preset threshold. Similarly, a terminal device whose downlink is idle may be understood as that no data is transmitted on the downlink used by the first control apparatus to send data to the terminal device, or a data amount transmitted on the downlink is less than a preset threshold. "A link is idle" is not specifically limited in this application. Refer to a definition in the conventional technology.

The following describes, by using an example in which the target terminal device is a terminal device whose uplink is idle, a process in which the target terminal device provides a relay service for an uplink used by the second control apparatus to send data to the first control apparatus, or forwards and transparently transmits uplink data that is sent by the second control apparatus to the first control apparatus.

Optionally, the method 200 may further include: The second control apparatus sends second data to the target terminal device. A destination address of the second data is an address of the first control apparatus, and a source address of the second data is the address of the second control apparatus.

Correspondingly, the target terminal device may receive the second data from the second control apparatus, and forward or transparently transmit the second data to the first control apparatus based on the destination address.

It should be noted that the target terminal device may determine, based on the destination address of the second data, that the second data is not sent to the target terminal device, but is sent to the first control apparatus. Therefore, the target terminal device does not parse the second data, but directly forwards or transparently transmits the second data to the first control apparatus.

Correspondingly, the first control apparatus may receive the second data forwarded by the target terminal device.

It should be noted that the first control apparatus may determine, based on the source address of the second data, that the second data is not sent by the target terminal device to the first control apparatus, but is sent by the second control apparatus to the first control apparatus.

In a possible implementation, when the first time-frequency resource configured based on first time-frequency resource information includes a second time-frequency resource used to transmit the second data, the first control apparatus may send the second data to the target terminal device on the second time-frequency resource.

Optionally, the second control apparatus may send the second data to the target terminal device when a trigger condition is met. This is not limited in this embodiment of this application.

In other words, when the trigger condition is not met, the second control apparatus sends the second data to the first control apparatus in an original direct transmission mode (namely, a mode in which data is directly transmitted to the first control apparatus through an uplink and a downlink). On the contrary, when the trigger condition is met, the second control apparatus switches from the direct transmission mode to a relay mode (namely, a mode in which data is transmitted to the first control apparatus by using a relay), and sends the second data to the target terminal device. It should be noted that a single trigger condition is used as an example for description in this application. However, a combination of a plurality of trigger conditions for triggering mode switching also falls within the protection scope of this application. For example, the following trigger condition 1 and trigger condition 2 may be used separately or in combination.

Trigger condition 1: The first relay configuration information is received.

In a possible implementation, the second control apparatus may trigger, based on the first relay configuration information, to send the second data to the target terminal device.

Trigger condition 2: Transmission indication information is received.

In a possible implementation, the first control apparatus may send the transmission indication information to the second control apparatus. The transmission indication information is used to indicate to transmit data between the second control apparatus and the first control apparatus by using the target terminal device. Correspondingly, the second control apparatus may trigger, based on the transmission indication information, to send the second data to the target terminal device.

The following describes, by using an example in which the target terminal device is a terminal device whose downlink is idle, a process in which the target terminal device provides a relay service for a downlink used by the first control apparatus to send data to the second control apparatus, or forwards and transparently transmits downlink data that is sent by the first control apparatus to the second control apparatus.

Optionally, the method may further include: The first control apparatus sends third data to the target terminal device. A destination address of the third data is the address of the second control apparatus, and a source address of the third data is the address of the first control apparatus.

Correspondingly, the target terminal device may receive the third data from the first control apparatus, and forward or transparently transmit the third data to the second control apparatus based on the destination address.

It should be noted that the target terminal device may determine, based on the destination address of the third data, that the third data is not sent to the target terminal device, but is sent to the second control apparatus. Therefore, the target terminal device does not parse the third data, but directly forwards or transparently transmits the third data to the second control apparatus.

Correspondingly, the second control apparatus may receive the third data forwarded by the target terminal device.

It should be noted that the second control apparatus may determine, based on the source address of the third data, that the third data is not sent by the target terminal device to the second control apparatus, but is sent by the first control apparatus to the second control apparatus.

In a possible implementation, when the first time-frequency resource configured based on the first time-frequency resource information includes a third time-frequency resource used to transmit the third data, the second control apparatus may send the third data to the target terminal device on the third time-frequency resource.

Optionally, the first control apparatus may send the third data to the target terminal device when a trigger condition is met. This is not limited in this embodiment of this application.

In other words, when the trigger condition is not met, the first control apparatus sends the third data to the second control apparatus in an original direct transmission mode (namely, a mode in which data is directly transmitted to the second control apparatus through an uplink and a downlink). On the contrary, when the trigger condition is met, the first control apparatus switches from the direct transmission mode to a relay mode (namely, a mode in which data is transmitted to the second control apparatus by using a relay), and sends the third data to the target terminal device. It should be noted that a single trigger condition is used as an example for description in this application. However, a combination of a plurality of trigger conditions for triggering mode switching also falls within the protection scope of this application. For example, the following trigger condition 1, trigger condition 2, and trigger condition 3 may be used separately or in any combination.

Trigger condition 1: Link quality between the first control apparatus and the second control apparatus is relatively poor (for example, a signal strength is less than a predetermined signal strength threshold).

Trigger condition 2: A target terminal device is configured for the second control apparatus.

Trigger condition 3: Transmission indication information is received.

In a possible implementation, the second control apparatus may send the transmission indication information to the first control apparatus. The transmission indication information is used to indicate to transmit data between the second control apparatus and the first control apparatus by using the target terminal device. Correspondingly, the first control apparatus may trigger, based on the transmission indication information, to send the third data to the target terminal device.

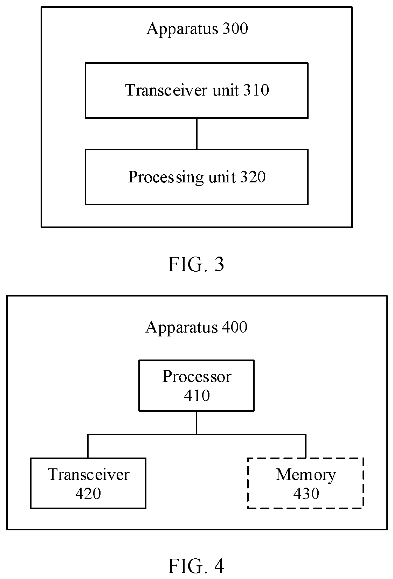

The foregoing describes, with reference to FIG. 2, the data transmission method 200 provided in embodiments of this application. The following describes, with reference to FIG. 3 to FIG. 5, a data transmission apparatus configured to perform the method 200.

It should be noted that the data transmission apparatus may be the first control apparatus in the embodiment of the method 200, and can perform the method performed by the first control apparatus in the method 200. Alternatively, the data transmission apparatus may be the second control apparatus in the embodiment of the method 200, and can perform the method performed by the second control apparatus in the method 200. Alternatively, the data transmission apparatus may be the terminal device in the embodiment of the method 200, and can perform the method performed by the terminal device in the method 200.

It can be understood that, to implement the foregoing functions, the data transmission apparatus includes a corresponding hardware and/or software module for performing each function. Algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the data transmission apparatus may be divided into functional modules based on the foregoing method examples. For example, functional modules may be obtained through division based on corresponding functions, or at least two functions may be integrated into one processing module. The integrated module may be implemented in a form of hardware. It should be noted that, in embodiments, division into modules is an example and is merely logical function division. During actual implementation, there may be another division manner.

When functional modules are obtained through division based on corresponding functions, FIG. 3 is a schematic diagram of a possible composition of the data transmission apparatus in the foregoing embodiments. As shown in FIG. 3, an apparatus 300 may include a transceiver unit 310 and a processing unit 320.

The processing unit 320 may control the transceiver unit 310 to implement the method performed by the first control apparatus, the second control apparatus, or the terminal device in the embodiment of the method 200, and/or is used in another process of the technology described in this specification.

It should be noted that all related content of the steps in the foregoing method embodiments may be cited in function description of corresponding functional modules. Details are not described herein again.

When an integrated unit is used, the apparatus 300 may include a processing unit, a storage unit, and a communication unit. The processing unit may be configured to control and manage actions of the apparatus 300, for example, may be configured to support the apparatus 300 in performing the steps performed by the foregoing units. The storage unit may be configured to support the apparatus 300 in storing program code, data, and the like. The communication unit may be configured to support communication between the apparatus 300 and another device.

The processing unit may be a processor or a controller. The processing unit may implement or execute various example logical blocks, modules, and circuits described with reference to content disclosed in this application. The processor may alternatively be a combination, for example, a combination including one or more microprocessors or a combination of digital signal processor (digital signal processor, DSP) and a microprocessor, for implementing a computing function. The storage unit may be a memory. The communication unit may be specifically a device that communicates with another electronic device, for example, a radio frequency circuit, a Bluetooth chip, and a Wi-Fi chip.

In a possible implementation, the data transmission apparatus in this embodiment may be an apparatus 400 having a structure shown in FIG. 4. The apparatus 400 may be a schematic diagram of a structure of the first control apparatus, the second control apparatus, or the terminal device. The apparatus 400 includes a processor 410 and a transceiver 420. The processor 410 and the transceiver 420 communicate with each other through an internal connection path. A related function implemented by the processing unit 320 in FIG. 3 may be implemented by the processor 410. A related function implemented by the transceiver unit 310 may be implemented by the processor 410 by controlling the transceiver 420.

Optionally, the apparatus 400 may further include a memory 430. The processor 410, the transceiver 420, and the memory 430 communicate with each another through an internal connection path. A related function implemented by the storage unit in FIG. 3 may be implemented by the memory 430.

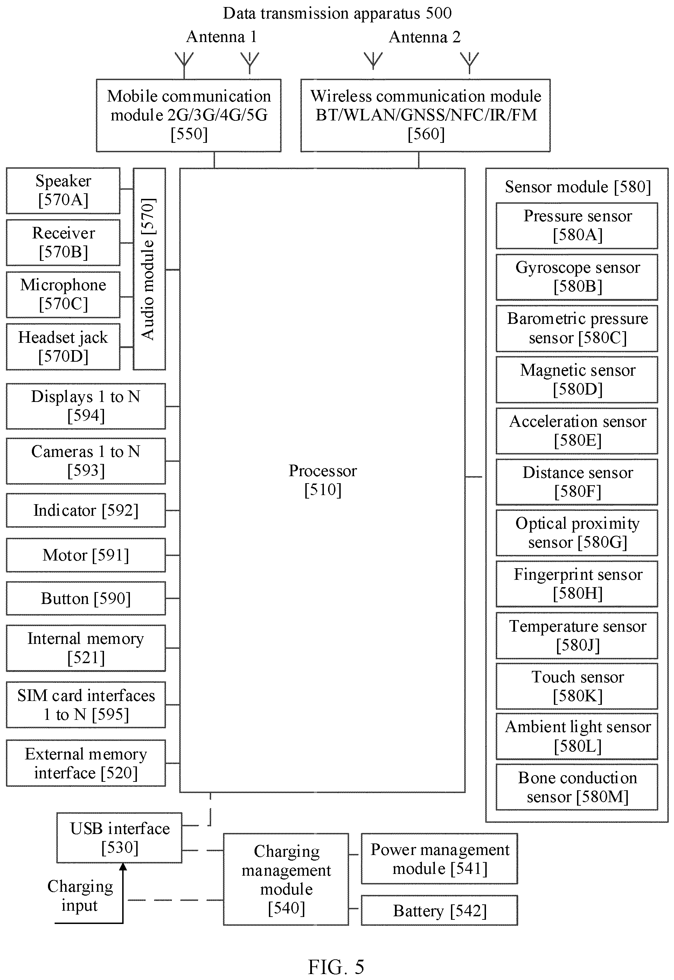

In a possible implementation, FIG. 5 is another schematic block diagram of the data transmission apparatus according to an embodiment of this application. The data transmission apparatus may be the first control apparatus in the embodiment of the method 200, and can perform the method implemented by the first control apparatus in the method 200. Alternatively, the data transmission apparatus may be the second control apparatus in the embodiment of the method 200, and can perform the method implemented by the second control apparatus in the method 200. Alternatively, the data transmission apparatus may be the terminal device in the embodiment of the method 200, and can perform the method implemented by the terminal device in the method 200.

As shown in FIG. 5, the data transmission apparatus 500 may include at least one of a processor 510, an external memory interface 520, an internal memory 521, a universal serial bus (universal serial bus, USB) interface 530, a charging management module 540, a power management module 541, a battery 542, an antenna 1, and an antenna 2, a mobile communication module 550, a wireless communication module 560, an audio module 570, a speaker 570A, a receiver 570B, a microphone 570C, a headset interface 570D, a sensor module 580, a button 590, a motor 591, an indicator 592, a camera 593, a display 594, a subscriber identification module (subscriber identification module, SIM) card interface 595, or the like.

It may be understood that a structure shown in this embodiment of this application does not constitute a specific limitation on the data transmission apparatus 500. In some other embodiments of this application, the data transmission apparatus 500 may include more or fewer components than those shown in the figure, or some components may be combined, or some components may be split, or there may be a different component arrangement. The components shown in the figure may be implemented by hardware, software, or a combination of software and hardware.

The processor 510 may include one or more processing units. For example, the processor 510 may include an application processor (application processor, AP), a modem processor, a graphics processing unit (graphics processing unit, GPU), an image signal processor (image signal processor, ISP), a controller, a video codec, a digital signal processor (digital signal processor, DSP), an application-specific integrated circuit (application-specific integrated circuit, ASIC), a field-programmable gate array (field-programmable gate array, FPGA), a baseband processor, a neural-network processing unit (neural-network processing unit, NPU), and/or the like. Different processing units may be independent components, or may be integrated into one or more processors. In some embodiments, the data transmission apparatus 500 may alternatively include one or more processors 510. The controller may generate an operation control signal based on instruction operation code and a time sequence signal, to complete control of instruction reading and instruction execution. In some other embodiments, a memory may be disposed in the processor 510, to store instructions and data. For example, the memory in the processor 510 may be a cache. The memory may store instructions or data just used or cyclically used by the processor 510. If the processor 510 needs to use the instructions or the data again, the processor 510 may directly invoke the instructions or the data from the memory. This avoids repeated access and reduces waiting time of the processor 510, thereby improving data processing or instruction execution efficiency of the data transmission apparatus 500.

In some embodiments, the processor 510 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 530 is an interface that conforms to a USB standard specification, and may be specifically a mini USB interface, a micro USB interface, a USB type-C interface, or the like. The USB interface 530 may be configured to connect to a charger to charge the data transmission apparatus 500, or may be configured to transmit data between the data transmission apparatus 500 and a peripheral device. The USB interface 530 may alternatively be used to connect to a headset, and play audio by using the headset.

It can be understood that an interface connection relationship between the modules illustrated in this embodiment of this application is merely an example for description, and does not constitute a limitation on the structure of the data transmission apparatus 500. In some other embodiments of this application, the data transmission apparatus 500 may alternatively use an interface connection manner different from that in the foregoing embodiment, or use a combination of a plurality of interface connection manners.

The charging management module 540 is configured to receive a charging input from a charger. The charger may be a wireless charger or a wired charger. In some embodiments of wired charging, the charging management module 540 may receive a charging input of a wired charger through the USB interface 530. In some embodiments of wireless charging, the charging management module 540 may receive a wireless charging input through a wireless charging coil of the data transmission apparatus 500. The charging management module 540 may further supply power to the terminal by using the power management module 541 while charging the battery 542.

The power management module 541 is configured to connect to the battery 542, the charging management module 540, and the processor 510. The power management module 541 receives an input of the battery 542 and/or the charging management module 540, and supplies power to the processor 510, the internal memory 521, an external memory, the display 594, the camera 593, the wireless communication module 560, and the like. The power management module 541 may be configured to monitor parameters such as a battery capacity, a battery cycle count, and a battery health status (electric leakage or impedance). In some other embodiments, the power management module 541 may alternatively be disposed in the processor 510. In some other embodiments, the power management module 541 and the charging management module 540 may alternatively be disposed in a same device.

A wireless communication function of the data transmission apparatus 500 may be implemented by using the antenna 1, the antenna 2, the mobile communication module 550, the wireless communication module 560, the modem processor, the baseband processor, and the like.

The antenna 1 and the antenna 2 are configured to transmit and receive an electromagnetic wave signal. Each antenna in the data transmission apparatus 500 may be configured to cover one or more communication frequency bands. Different antennas may be further multiplexed, to improve antenna utilization. For example, the antenna 1 may be multiplexed as a diversity antenna of a wireless local area network. In some other embodiments, an antenna may be used in combination with a tuning switch.

The mobile communication module 550 may provide a wireless communication solution that is applied to the data transmission apparatus 500 and that includes 2G, 3G, 4G, 5G, or the like. The mobile communication module 550 may include at least one filter, a switch, a power amplifier, a low noise amplifier (low noise amplifier, LNA), and the like. The mobile communication module 550 may receive an electromagnetic wave through the antenna 1, perform processing such as filtering or amplification on the received electromagnetic wave, and transmit a processed electromagnetic wave to the modem processor for demodulation. The mobile communication module 550 may further amplify a signal modulated by the modem processor, and convert an amplified signal into an electromagnetic wave through the antenna 1 for radiation. In some embodiments, at least some functional modules in the mobile communication module 550 may be disposed in the processor 510. In some embodiments, at least some functional modules in the mobile communication module 550 and at least some modules in the processor 510 may be disposed in a same device.

The wireless communication module 560 may provide a wireless communication solution that is applied to the data transmission apparatus 500 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, another possible general-purpose transmission technology, or the like.

Optionally, the wireless communication module 560 may be one or more components integrating at least one communication processing module. One communication processing module may correspond to one network interface. The network interface may be disposed in different service function modes. Network interfaces disposed in different modes may establish network connections corresponding to the modes.

For example, a network connection supporting a P2P function may be established by using a network interface in a P2P function mode. A network connection supporting a STA function may be established by using a network interface in a STA function mode. A network connection supporting an AP function may be established by using a network interface in an AP mode.

The wireless communication module 560 receives an electromagnetic wave through the antenna 2, performs frequency modulation and filtering processing on an electromagnetic wave signal, and sends a processed signal to the processor 510. The wireless communication module 560 may further receive a to-be-sent signal from the processor 510, perform frequency modulation and amplification on the signal, and convert a processed signal into an electromagnetic wave for radiation through the antenna 2.

The data transmission apparatus 500 may implement a display function through the GPU, the display 594, the application processor, and the like. The GPU is a microprocessor for image processing, and is connected to the display 594 and the application processor. The GPU is configured to perform mathematical and geometric computation, and render an image. The processor 510 may include one or more GPUs that execute program instructions to generate or change display information.

The display 594 is configured to display an image, a video, or the like. The display 594 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the data transmission apparatus 500 may include one or more displays 594.

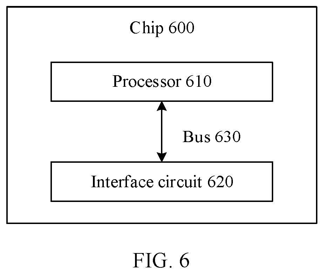

In some embodiments of this application, when the display panel is made of a material such as an OLED, an AMOLED, or an FLED, the display 594 in FIG. 6 may be folded. Herein, that the display 594 may be folded means that the display may be folded to any angle at any part and may be maintained at the angle. For example, the display 594 may be folded left and right in the middle, or may be folded up and down in the middle. In this application, the display that can be folded is referred to as a foldable display. The touch display may be a screen, or may be a display formed by combining a plurality of screens. This is not limited herein.

The display 594 of the data transmission apparatus 500 may be a flexible display. Currently, the flexible display attracts much attention because of unique features and huge potential of the flexible display. Compared with a conventional display, the flexible display has features of strong flexibility and bendability, and can provide a user with a new bendability-based interaction mode, to satisfy more requirements of the user on a terminal. For a data transmission apparatus equipped with a foldable display, the foldable display of the data transmission apparatus may be switched between a small display in a folded form and a large display in an unfolded form at any time. Therefore, the user uses a multi-screen display function more frequently on the data transmission apparatus equipped with the foldable display.

The data transmission apparatus 500 may implement a photographing function by using the ISP, the camera 593, the video codec, the GPU, the display 594, the application processor, and the like.

The ISP is configured to process data fed back by the camera 593. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 593.

The camera 593 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the data transmission apparatus 500 may include one or more cameras 593.

The digital signal processor is configured to process a digital signal, and may process another digital signal in addition to the digital image signal. For example, when the data transmission apparatus 500 selects a frequency, the digital signal processor is configured to perform Fourier transform on frequency energy.

The video codec is configured to compress or decompress a digital video. The data transmission apparatus 500 may support one or more video codecs. In this way, the data transmission apparatus 500 can play or record videos in a plurality of encoding formats, for example, moving picture experts group (moving picture experts group, MPEG)-1, MPEG-2, MPEG-3, and MPEG-4.

The NPU is a neural-network (neural-network, NN) processing unit. The NPU quickly processes input information based on a structure of a biological neural network, for example, a transfer service function between human brain neurons, and may further continuously perform self-learning. The NPU can implement applications such as intelligent cognition of the data transmission apparatus 500, for example, image recognition, facial recognition, speech recognition, and text understanding.

The external memory interface 520 may be configured to connect to an external storage card, for example, a micro-SD card, to extend a storage capability of the data transmission apparatus 500. The external storage card communicates with the processor 510 through the external memory interface 520, to implement a data storage function. For example, files such as music and videos are stored in the external storage card.

The internal memory 521 may be configured to store one or more computer programs. The one or more computer programs include instructions. The processor 510 may run the instructions stored in the internal memory 521, so that the data transmission apparatus 500 performs a screen-off display method provided in some embodiments of this application, various applications, data processing, and the like. The internal memory 521 may include a program storage area and a data storage area. The program storage area may store an operating system. The program storage area may further store one or more applications (such as gallery and contacts), and the like. The data storage area may store data (for example, photos and contacts) created during use of the data transmission apparatus 500, and the like. In addition, the internal memory 521 may include a high-speed random access memory, or may include a non-volatile memory, for example, one or more magnetic disk storage devices, a flash memory device, or a universal flash storage (universal flash storage, UFS). In some embodiments, the processor 510 may run the instructions stored in the internal memory 521 and/or the instructions stored in the memory that is disposed in the processor 510, so that the data transmission apparatus 500 performs the screen-off display method provided in embodiments of this application, other applications, and data processing. The data transmission apparatus 500 may implement audio functions such as music playing and recording by using the audio module 570, the speaker 570A, the receiver 570B, the microphone 570C, the headset jack 570D, the application processor, and the like.

The sensor module 580 may include a pressure sensor 580A, a gyroscope sensor 580B, a barometric pressure sensor 580C, a magnetic sensor 580D, an acceleration sensor 580E, a distance sensor 580F, an optical proximity sensor 580G, a fingerprint sensor 580H, a temperature sensor 580J, a touch sensor 580K, an ambient light sensor 580L, a bone conduction sensor 580M, and the like.

An embodiment of this application further provides a computer storage medium. The computer storage medium stores computer instructions. When the computer instructions are run on an electronic device, the electronic device is enabled to perform the related method steps, to implement the data transmission method in the foregoing embodiments.

An embodiment of this application further provides a computer program product. When the computer program product runs on a computer, the computer is enabled to perform the foregoing related steps, to implement the data transmission method in the foregoing embodiments.

An embodiment of this application further provides an apparatus. The apparatus may be specifically a chip, an integrated circuit, a component, or a module. Specifically, the apparatus may include a connected processor and a memory configured to store instructions, or the apparatus includes at least one processor, configured to obtain instructions from an external memory. When the apparatus runs, the processor may execute instructions, so that the chip performs the data transmission method in the foregoing method embodiments.

FIG. 6 is a schematic diagram of a structure of a chip 600. The chip 600 includes one or more processors 610 and an interface circuit 620. Optionally, the chip 600 may further include a bus 630.

The processor 610 may be an integrated circuit chip, and has a signal processing capability. In an implementation process, the steps in the foregoing method 200 may be completed by using an integrated logic circuit of hardware in the processor 610 or instructions in a form of software.

Optionally, the foregoing processor 610 may be a general-purpose processor, a DSP, an ASIC, an FPGA or another programmable logic device, a discrete gate or transistor logic device, or a discrete hardware component. The processor may implement or perform the methods and steps that are disclosed in embodiments of this application. The general-purpose processor may be a microprocessor, or the processor may be any conventional processor or the like.

The interface circuit 620 may be used to send or receive data, instructions, or information. The processor 610 may process data, instructions, or other information received through the interface circuit 620, and send, through the interface circuit 620, information obtained after processing.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking operation instructions (the operation instructions may be stored in an operating system) stored in the memory.

Optionally, the chip may be used in the first control apparatus, the second control apparatus, or the terminal device in embodiments of this application. Optionally, the interface circuit 620 may be used to output an execution result of the processor 610. For the data transmission method provided in one or more embodiments of this application, refer to the foregoing embodiments. Details are not described herein again.

It should be noted that functions corresponding to each of the processor 610 and the interface circuit 620 may be implemented by using a hardware design, may be implemented by using a software design, or may be implemented by combining software and hardware. This is not limited herein.

An embodiment of this application further provides a terminal. The terminal may be a transportation vehicle or an intelligent device. The transportation vehicle or the intelligent device includes the apparatus 400 in FIG. 4, the apparatus 500 in FIG. 5, or the apparatus 600 in FIG. 6.

For example, the terminal may be a smart home device, an intelligent wearable device, an uncrewed aerial vehicle, an unmanned transport vehicle, an automobile, a robot, or the like.

In a possible implementation, the terminal is a vehicle, and includes at least one of the first control apparatus, the second control apparatus, the at least one terminal device, and the like in the foregoing embodiments of this application.

The data transmission apparatus, the computer storage medium, the computer program product, the chip, or the terminal provided in the embodiments is configured to perform the corresponding method provided above. Therefore, for advantageous effects that can be achieved, refer to the advantageous effects in the corresponding method provided above. Details are not described herein again.

It should be understood that sequence numbers of the foregoing processes do not mean execution sequences in various embodiments of this application. The execution sequences of the processes should be determined based on functions and internal logic of the processes, but should not be construed as any limitation on the implementation processes in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on this understanding, the technical solutions of this application essentially, or the part contributing to the conventional technology, or some of the technical solutions may be implemented in a form of a software product. The computer software product is stored in a storage medium, and includes several instructions for instructing a computer device (which may be, for example, a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method performed by a second control apparatus, comprising:
receiving first indication information from a first control apparatus;
generating first data; and
sending the first data to at least one terminal device based on the first indication information, wherein the first data is used to measure link quality between the second control apparatus and the at least one terminal device, wherein
the sending the first data to the at least one terminal device based on the first indication information comprises:
sending the first data to the at least one terminal device based on the first indication information and a transmission parameter, wherein the transmission parameter comprises at least one of a modulation and coding scheme, MCS, a coding rate, or transmit power used for the first data; and
the transmission parameter is configured by using the first control apparatus.

2. The method according to any one of claims 1, wherein the method further comprises:
receiving first relay configuration information from the first control apparatus, wherein the first relay configuration information is used to configure a target terminal device for the second control apparatus, and the at least one terminal device comprises the target terminal device.

3. The method according to claim 2, wherein the method further comprises:
sending second data to the target terminal device, wherein a destination address of the second data is an address of the first control apparatus.

4. The method according to claim 3, wherein before the sending second data to the target terminal device, the method further comprises:
receiving transmission indication information from the first control apparatus, wherein the transmission indication information is used to indicate to transmit data between the second control apparatus and the first control apparatus by using the target terminal device; and
the sending second data to the target terminal device comprises:
sending the second data to the target terminal device based on the transmission indication information.

5. The method according to any one of claims 1 to 4, wherein the first data comprises management information and a source address, the management information is used to indicate that the first data is used to measure link quality, and the source address is an address of the second control apparatus.

6. The method according to any one of claims 1 to 5, wherein the sending the first data to at least one terminal device based on the first indication information comprises:
multicasting the first data to the at least one terminal device based on the first indication information, wherein the first data comprises a multicast address of a terminal device group to which the at least one terminal device belongs.

7. A data transmission method performed by a first control apparatus, comprising:
sending first indication information to a second control apparatus, wherein the first indication information is used to indicate to measure link quality between the second control apparatus and at least one terminal device; and
receiving feedback information from at least one first terminal device, wherein the feedback information of the first terminal device is used to indicate that the first terminal device successfully receives first data from the second control apparatus, the first data is used to measure the link quality between the second control apparatus and the at least one terminal device, and the at least one terminal device comprises the at least one first terminal device;
the method further comprises:
sending parameter configuration information to the second control apparatus, wherein the parameter configuration information is used to configure a transmission parameter, and the transmission parameter comprises at least one of a modulation and coding scheme MCS, a coding rate, or transmit power used for the first data.

8. The method according to claim 7, wherein the method further comprises:
determining a target terminal device from the at least one first terminal device based on the feedback information of the at least one first terminal device.

9. The method according to claim 8, wherein the method further comprises:
sending first relay configuration information to the second control apparatus, wherein the first relay configuration information is used to configure the target terminal device for the second control apparatus.

10. The method according to claim 9, wherein the method further comprises:
receiving second data from the target terminal device, wherein a source address of the second data is an address of the second control apparatus.

11. A data transmission method performed by a first terminal apparatus, comprising:
receiving first data from a second control apparatus, wherein the first data is used to measure link quality between the second control apparatus and the at least one terminal device, and the at least one terminal device comprises a target terminal device; and
sending feedback information to a first control apparatus, wherein the feedback information is used to indicate that the target terminal device successfully receives the first data from the second control apparatus,
wherein the receiving first data from a second control apparatus comprises:
receiving the first data from the second control apparatus based on a transmission parameter, wherein the transmission parameter comprises at least one of a modulation and coding scheme MCS, a coding rate, or transmit power used for the first data; and
the transmission parameter is configured by using the first control apparatus.

12. A data transmission apparatus (500), comprising at least one processor (510) and a memory (521), wherein the at least one processor (510) is coupled to the memory (521), and the at least one processor (510) executes a program or instructions stored in the memory (521), so that the data transmission apparatus implements the method according to any one of claims 1 to 5, any one of claims 7 to 10, or claim 11.

13. A chip apparatus (600), comprising at least one processor (610) and an interface circuit (620), wherein the interface circuit (620) is configured to send or receive data, instructions, or information to or from the at least one processor (610), and when executing program code or instructions, the at least one processor (610) implements the method according to any one of claims 1 to 6, any one of claims 7 to 10, or claim 11.

## Patentansprüche

1. Datenübertragungsverfahren, das durch eine zweite Steuereinrichtung durchgeführt wird, das umfasst:
Empfangen von ersten Angabeinformationen von einer ersten Steuereinrichtung;
Erzeugen von ersten Daten; und
Senden der ersten Daten an mindestens ein Endgerät basierend auf den ersten Angabeinformationen, wobei die ersten Daten verwendet werden, um eine Verbindungsqualität zwischen der zweiten Steuereinrichtung und dem mindestens einen Endgerät zu messen, wobei
das Senden der ersten Daten an das mindestens eine Endgerät basierend auf den ersten Angabeinformationen umfasst:
Senden der ersten Daten an das mindestens eine Endgerät basierend auf den ersten Angabeinformationen und einem Übertragungsparameter, wobei der Übertragungsparameter mindestens eines von einem Modulations- und
Codierschema, MCS, einer Codierrate oder einer für die ersten Daten verwendeten Übertragungsleistung umfasst; und der Übertragungsparameter durch Verwenden der ersten Steuereinrichtung konfiguriert wird.

2. Verfahren nach einem der Ansprüche 1, wobei das Verfahren ferner umfasst: Empfangen von ersten Relaiskonfigurationsinformationen von der ersten Steuereinrichtung, wobei die ersten Relaiskonfigurationsinformationen verwendet werden, um ein Zielendgerät für die zweite Steuereinrichtung zu konfigurieren, und das mindestens eine Endgerät das Zielendgerät umfasst.

3. Verfahren nach Anspruch 2, wobei das Verfahren ferner umfasst:
Senden von zweiten Daten an das Zielendgerät, wobei eine Zieladresse der zweiten Daten eine Adresse der ersten Steuereinrichtung ist.

4. Verfahren nach Anspruch 3, wobei das Verfahren vor dem Senden von zweiten Daten an das Zielendgerät ferner umfasst:
Empfangen von Übertragungsangabeinformationen von der ersten Steuereinrichtung, wobei die Übertragungsangabeinformationen verwendet werden, um anzugeben, dass Daten zwischen der zweiten Steuereinrichtung und der ersten Steuereinrichtung durch Verwenden des Zielendgeräts übertragen werden sollen; und
das Senden von zweiten Daten an das Zielendgerät umfasst:
Senden der zweiten Daten an das Zielendgerät basierend auf den Übertragungsangabeinformationen.

5. Verfahren nach einem der Ansprüche 1 bis 4, wobei die ersten Daten Verwaltungsinformationen und eine Quelladresse umfassen, die Verwaltungsinformationen verwendet werden, um anzugeben, dass die ersten Daten verwendet werden, um die Verbindungsqualität zu messen, und die Quelladresse eine Adresse der zweiten Steuereinrichtung ist.

6. Verfahren nach einem der Ansprüche 1 bis 5, wobei das Senden der ersten Daten an mindestens ein Endgerät basierend auf den ersten Angabeinformationen umfasst: Multicasten der ersten Daten an das mindestens eine Endgerät basierend auf den ersten Angabeinformationen, wobei die ersten Daten eine Multicast-Adresse einer Endgerätegruppe umfassen, zu der das mindestens eine Endgerät gehört.

7. Datenübertragungsverfahren, das durch eine erste Steuereinrichtung durchgeführt wird, das umfasst:
Senden von ersten Angabeinformationen an eine zweite Steuereinrichtung, wobei die ersten Angabeinformationen verwendet werden, um die Verbindungsqualität zwischen der zweiten Steuereinrichtung und mindestens einem Endgerät zu messen; und
Empfangen von Rückmeldeinformationen von mindestens einem ersten Endgerät, wobei die Rückmeldeinformationen des ersten Endgeräts verwendet werden, um anzugeben, dass das erste Endgerät erfolgreich erste Daten von der zweiten Steuereinrichtung empfängt, die ersten Daten verwendet werden, um die Verbindungsqualität zwischen der zweiten Steuereinrichtung und dem mindestens einen Endgerät zu messen, und das mindestens eine Endgerät das mindestens eine erste Endgerät umfasst;
wobei das Verfahren ferner umfasst:
Senden von Parameterkonfigurationsinformationen an die zweite Steuereinrichtung, wobei die Parameterkonfigurationsinformationen verwendet werden, um einen Übertragungsparameter zu konfigurieren, und der Übertragungsparameter mindestens eines von einem Modulations- und Codierschema MCS, einer Codierrate oder einer für die ersten Daten verwendeten Übertragungsleistung umfasst.

8. Verfahren nach Anspruch 7, wobei das Verfahren ferner umfasst:
Bestimmen eines Zielendgeräts aus dem mindestens einen ersten Endgerät basierend auf den Rückmeldeinformationen des mindestens einen ersten Endgeräts.

9. Verfahren nach Anspruch 8, wobei das Verfahren ferner umfasst:
Senden von ersten Relaiskonfigurationsinformationen an die zweite Steuereinrichtung, wobei die ersten Relaiskonfigurationsinformationen verwendet werden, um das Zielendgerät für die zweite Steuereinrichtung zu konfigurieren.

10. Verfahren nach Anspruch 9, wobei das Verfahren ferner umfasst:
Empfangen von zweiten Daten von dem Zielendgerät, wobei eine Quelladresse der zweiten Daten eine Adresse der zweiten Steuereinrichtung ist.

11. Datenübertragungsverfahren, das durch eine erste Steuereinrichtung durchgeführt wird, das umfasst:
Empfangen von ersten Daten von einer zweiten Steuereinrichtung, wobei die ersten Daten verwendet werden, um die Verbindungsqualität zwischen der zweiten Steuereinrichtung und dem mindestens einen Endgerät zu messen, und das mindestens eine Endgerät ein Zielendgerät umfasst; und
Senden von Rückmeldeinformationen an eine erste Steuereinrichtung, wobei die Rückmeldeinformationen verwendet werden, um anzugeben, dass das Zielendgerät die ersten Daten von der zweiten Steuereinrichtung erfolgreich empfängt,
wobei das Empfangen von ersten Daten von einer zweiten Steuereinrichtung umfasst:
Empfangen der ersten Daten von der zweiten Steuereinrichtung basierend auf einem Übertragungsparameter, wobei der Übertragungsparameter mindestens eines von einem Modulations- und Codierschema MCS, einer Codierrate oder einer für die ersten Daten verwendeten Übertragungsleistung umfasst; und
der Übertragungsparameter durch Verwenden der ersten Steuereinrichtung konfiguriert wird.

12. Datenübertragungseinrichtung (500), die mindestens einen Prozessor (510) und einen Speicher (521) umfasst, wobei der mindestens eine Prozessor (510) mit dem Speicher (521) gekoppelt ist und der mindestens eine Prozessor (510) ein in dem Speicher (521) gespeichertes Programm oder Anweisungen ausführt, sodass die Datenübertragungseinrichtung das Verfahren nach einem der Ansprüche 1 bis 5, einem der Ansprüche 7 bis 10 oder Anspruch 11 implementiert.

13. Chipeinrichtung (600), die mindestens einen Prozessor (610) und eine Schnittstellenschaltung (620) umfasst, wobei die Schnittstellenschaltung (620) konfiguriert ist, um Daten, Anweisungen oder Informationen an den mindestens einen Prozessor (610) zu senden oder von diesem zu empfangen, und wobei der mindestens eine Prozessor (610) bei einem Ausführen von Programmcode oder Anweisungen das Verfahren nach einem der Ansprüche 1 bis 6, einem der Ansprüche 7 bis 10 oder Anspruch 11 implementiert.

## Revendications

1. Procédé de transmission de données réalisé par un second appareil de commande, comprenant :
la réception de premières informations d'indication en provenance d'un premier appareil de commande ;
la génération de premières données ; et
l'envoi des premières données à au moins un dispositif terminal sur la base des premières informations d'indication, dans lequel les premières données sont utilisées pour mesurer une qualité de liaison entre le second appareil de commande et l'au moins un dispositif terminal, dans lequel
l'envoi des premières données à l'au moins un dispositif terminal sur la base des premières informations d'indication comprend :
l'envoi des premières données à l'au moins un dispositif terminal sur la base des premières informations d'indication et d'un paramètre de transmission, dans lequel le paramètre de transmission comprend au moins l'un parmi un schéma de modulation et de codage, MCS, un taux de codage, ou une puissance de transmission utilisée pour les premières données ; et le paramètre de transmission est configuré en utilisant le premier appareil de commande.

2. Procédé selon l'une quelconque des revendications 1, dans lequel le procédé comprend en outre :
la réception de premières informations de configuration de relais en provenance du premier appareil de commande, dans lequel les premières informations de configuration de relais sont utilisées pour configurer un dispositif terminal cible pour le second appareil de commande, et l'au moins un dispositif terminal comprend le dispositif terminal cible.

3. Procédé selon la revendication 2, dans lequel le procédé comprend en outre :
l'envoi de secondes données au dispositif terminal cible, dans lequel une adresse de destination des secondes données est une adresse du premier appareil de commande.

4. Procédé selon la revendication 3, dans lequel, avant l'envoi de secondes données au dispositif terminal cible, le procédé comprend en outre :
la réception d'informations d'indication de transmission en provenance du premier appareil de commande, dans lequel les informations d'indication de transmission sont utilisées pour indiquer de transmettre des données entre le second appareil de commande et le premier appareil de commande en utilisant le dispositif terminal cible ; et
l'envoi de secondes données au dispositif terminal cible comprend :
l'envoi des secondes données au dispositif terminal cible sur la base des informations d'indication de transmission.

5. Procédé selon l'une quelconque des revendications 1 à 4, dans lequel les premières données comprennent des informations de gestion et une adresse source, les informations de gestion sont utilisées pour indiquer que les premières données sont utilisées pour mesurer une qualité de liaison, et l'adresse source est une adresse du second appareil de commande.

6. Procédé selon l'une quelconque des revendications 1 à 5, dans lequel l'envoi des premières données à au moins un dispositif terminal sur la base des premières informations d'indication comprend :
la multidiffusion des premières données vers l'au moins un dispositif terminal sur la base des premières informations d'indication, dans lequel les premières données comprennent une adresse de multidiffusion d'un groupe de dispositifs terminaux auquel l'au moins un dispositif terminal appartient.

7. Procédé de transmission de données réalisé par un premier appareil de commande, comprenant :
l'envoi de premières informations d'indication à un second appareil de commande, dans lequel les premières informations d'indication sont utilisées pour indiquer de mesurer une qualité de liaison entre le second appareil de commande et au moins un dispositif terminal ; et
la réception d'informations de rétroaction en provenance d'au moins un premier dispositif terminal, dans lequel les informations de rétroaction du premier dispositif terminal sont utilisées pour indiquer que le premier dispositif terminal reçoit avec succès des premières données en provenance du second appareil de commande, les premières données sont utilisées pour mesurer la qualité de liaison entre le second appareil de commande et l'au moins un dispositif terminal, et l'au moins un dispositif terminal comprend l'au moins un premier dispositif terminal ;
le procédé comprend en outre :
l'envoi d'informations de configuration de paramètre au second appareil de commande, dans lequel les informations de configuration de paramètre sont utilisées pour configurer un paramètre de transmission, et le paramètre de transmission comprend au moins l'un parmi un schéma de modulation et de codage, MCS, un taux de codage, ou une puissance de transmission utilisée pour les premières données.

8. Procédé selon la revendication 7, dans lequel le procédé comprend en outre :
la détermination d'un dispositif terminal cible à partir de l'au moins un premier dispositif terminal sur la base des informations de rétroaction de l'au moins un premier dispositif terminal.

9. Procédé selon la revendication 8, dans lequel le procédé comprend en outre :
l'envoi de premières informations de configuration de relais au second appareil de commande, dans lequel les premières informations de configuration de relais sont utilisées pour configurer le dispositif terminal cible pour le second appareil de commande.

10. Procédé selon la revendication 9, dans lequel le procédé comprend en outre :
la réception de secondes données en provenance du dispositif terminal cible, dans lequel une adresse source des secondes données est une adresse du second appareil de commande.

11. Procédé de transmission de données réalisé par un premier appareil terminal, comprenant :
la réception de premières données en provenance d'un second appareil de commande, dans lequel les premières données sont utilisées pour mesurer une qualité de liaison entre le second appareil de commande et l'au moins un dispositif terminal, et l'au moins un dispositif terminal comprend un dispositif terminal cible ; et
l'envoi d'informations de rétroaction à un premier appareil de commande, dans lequel les informations de rétroaction sont utilisées pour indiquer que le dispositif terminal cible a reçu avec succès les premières données en provenance du second appareil de commande,
dans lequel la réception de premières données en provenance d'un second appareil de commande comprend :
la réception des premières données en provenance du second appareil de commande sur la base d'un paramètre de transmission, dans lequel le paramètre de transmission comprend au moins l'un parmi un schéma de modulation et de codage, MCS, un taux de codage, ou une puissance de transmission utilisée pour les premières données ; et
le paramètre de transmission est configuré en utilisant le premier appareil de commande.

12. Appareil de transmission de données (500), comprenant au moins un processeur (510) et une mémoire (521), dans lequel l'au moins un processeur (510) est couplé à la mémoire (521), et l'au moins un processeur (510) exécute un programme ou des instructions stockés dans la mémoire (521), de sorte que l'appareil de transmission de données met en œuvre le procédé selon l'une quelconque des revendications 1 à 5, l'une quelconque des revendications 7 à 10, ou la revendication 11.

13. Appareil à puce (600), comprenant au moins un processeur (610) et un circuit d'interface (620), dans lequel le circuit d'interface (620) est configuré pour envoyer des données, des instructions, ou des informations vers l'au moins un processeur (610) ou en recevoir en provenance de celui-ci, et, lors de l'exécution d'un code de programme ou d'instructions, l'au moins un processeur (610) met en œuvre le procédé selon l'une quelconque des revendications 1 à 6, l'une quelconque des revendications 7 à 10, ou la revendication 11.
